(19) Europäisches Patentamt
European Patent Office
Office européen des brevets

(11) EP 3 932 884 A1

(12) **EUROPÄISCHE PATENTANMELDUNG**

(43) Veröffentlichungstag:
**05.01.2022 Patentblatt 2022/01**

(21) Anmeldenummer: **21172041.2**

(22) Anmeldetag: **04.05.2021**

(51) Int Cl.:
*C03C 10/00* (2006.01) *C03C 3/085* (2006.01)
*C03C 1/00* (2006.01) *C03C 3/087* (2006.01)
*C03C 3/097* (2006.01) *C03C 4/10* (2006.01)
*F24C 15/10* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **02.07.2020 DE 102020117468**

(71) Anmelder: **SCHOTT AG**
**55122 Mainz (DE)**

(72) Erfinder:
- **WEISS, Evelin**
  **55131 Mainz (DE)**
- **JAKOB, Udo**
  **55234 Albig (DE)**
- **SIEBERS, Friedrich**
  **55283 Nierstein (DE)**
- **BOCKMEYER, Matthias**
  **55124 Mainz (DE)**

(54) **TRANSPARENTER, NICHT EINGEFÄRBTER LITHIUMALUMINIUMSILIKAT-GLASKERAMIKARTIKEL MIT HOCHQUARZ-MISCHKRISTALL ALS HAUPTKRISTALLPHASE SOWIE VERFAHREN ZUR HERSTELLUNG DES ARTIKELS UND DESSEN VERWENDUNG**

(57) Die Erfindung betrifft einen transparenten, nicht eingefärbten Lithiumaluminiumsilikat-Glaskeramikartikel mit Hochquarz-Mischkristallen als Hauptkristallphase, der im Wesentlichen folgenden Komponenten (in Gew.-% auf Oxidbasis) enthält:

$Li_2O$ 3 - < 4,5
$Al_2O_3$ 19-24
$SiO_2$ 62-70
$Na_2O$ 0-1,5
$K_2O$ 0-1,5
MgO 0,01 -<0,5
CaO 0-1,5
SrO 0-1,5
BaO 0-3
ZnO 0 - 3
$TiO_2$ >1,6-2,8
$ZrO_2$ 1 - < 2,5
$P_2O_5$ 0 - < 4
$Fe_2O_3$ 0,025 - 0,065
$MnO_2$ 0,002 - 0,05

und mit mindestens einem Läutermittel, ausgewählt aus der Gruppe $As_2O_3$ und/oder $SnO_2$ in Gehalten bis zu 2 Gew.-%, wobei der Glaskeramikartikel, gemessen bei 4 mm Dicke mit Normlicht D65, 2° über eine Buntheit c* von größer 3 bis 7 verfügt.

Die Erfindung betrifft auch seine Herstellung und seine Verwendungen.

EP 3 932 884 A1

## Beschreibung

Die Erfindung betrifft einen Glaskeramikartikel aus einer transparenten, nicht eingefärbten Lithiumaluminiumsilikat-Glaskeramik mit Hochquarz-Mischkristall als Hauptkristallphase gemäß dem Oberbegriff des Anspruchs 1.

Die Erfindung bezieht sich auch auf ein Verfahren zur Herstellung des Artikels und dessen Verwendung.

Artikel aus LAS-Glaskeramiken finden aufgrund ihrer besonderen Materialeigenschaften, beispielsweise ihres geringen Ausdehnungskoeffizienten verbunden mit hoher Temperaturunterschiedsfestigkeit und Temperaturwechselbeständigkeit, ihrer hohen Festigkeit, ihrer chemischen Beständigkeit und ihrer Transparenz breiten Einsatz. In der Regel wird das thermische Ausdehnungsverhalten so eingestellt, dass die Werkstoffe im Bereich ihrer Anwendungstemperaturen über sehr niedrige Ausdehnung, meist von - $1{,}5.10^{-6}$/K < $\alpha_{20/700}$ < + $1{,}5.10^{-6}$/K verfügen. Anforderungen für den Einsatz bei hohen Temperaturen beinhalten, dass die Glaskeramiken die geforderten Eigenschaften (wie z.B. thermische Ausdehnung, Transmission, Temperaturbelastbarkeit) während ihrer Lebensdauer beibehalten. Hinsichtlich Temperaturbelastbarkeit ist die wenn auch geringe Schrumpfung (compaction) der Glaskeramik bei hohen Temperaturen die kritische Größe. Da die Glaskeramikartikel im Einsatz meist ungleichmäßig durchwärmt werden, bauen sich sonst mit der Zeit durch die lokal unterschiedlich starke Schrumpfung Spannungen im Artikel auf.

Verbreitete Anwendungen der LAS-Glaskeramikartikel sind Brandschutzverglasungen, Kochgeschirr, transparente Kaminsichtscheiben, Ofensichtscheiben sowie als Kochflächen. Bei der Anwendung als Kochflächen werden die transparenten Glaskeramikplatten entweder mit Farboxiden eingefärbt oder auf der Unterseite mit einer blickdichten, meist farbigen Beschichtung versehen, um die Durchsicht auf die technischen Einbauten zu verhindern und die farbliche Anmutung bereitzustellen. Aussparungen in der Unterseitenbeschichtung ermöglichen das Anbringen von farbigen und weißen Displayanzeigen, meist Leuchtdioden oder Bildschirmen.

Für das Aussehen und die optischen Eigenschaften von Glaskeramiken sind Transmission und Streuung wichtige Eigenschaften.

Die vorliegende Erfindung betrifft die Klasse der transparenten, nicht eingefärbten Glaskeramiken, bei deren Herstellung keine färbenden Verbindungen zugegeben werden.

Bei den transparenten, nicht eingefärbten Glaskeramiken ist hohe Transparenz, das bedeutet hohe Helligkeit und eine geringe Farbe gewünscht. Beides bedeutet geringe Absorption, da die Absorptionsbanden je nach Lage im visuell sichtbaren Spektrum sowohl die Helligkeit erniedrigen als auch die Farbe erhöhen. Deshalb beträgt die Helligkeit solcher Glaskeramiken bei einer Dicke von 4 mm in der Regel mehr als 80 %.

In der Literatur finden sich für die Helligkeit auch die Bezeichnungen Lichttransmission oder integrale Transmission.

Transparente, nicht eingefärbte Glaskeramiken weisen allerdings durch die Keimbildner $TiO_2$ und falls vorhanden $SnO_2$ sowie die in den technischen Gemengerohstoffen vorkommenden färbende Verunreinigungen, wie Co-, Cr-, Mn-, Ni-, V-Ionen und insbesondere Eisenverunreinigungen, eine geringe Farbe auf.
Das Eisen färbt ionisch als $Fe^{2+}$ oder $Fe^{3+}$ und besonders über Farbkomplexe an denen die für die Keimbildung notwendige Komponente $TiO_2$ beteiligt ist. Die bräunlich gelbe Eigenfärbung der transparenten Glaskeramiken beruht maßgeblich auf elektronischen Übergängen an Farbkomplexen, die im kurzwelligen Bereich des sichtbaren Lichtes absorbieren. Der häufigste absorbierende Farbkomplex ist die Ausbildung von benachbarten Fe- und Ti-Ionen, zwischen denen elektronische Charge-Transfer-Übergänge stattfinden. Sn/Ti-Komplexe bewirken ebenfalls eine Eigenfarbe. Die Ausbildung dieser Farbkomplexe findet insbesondere beim Keramisieren der Glaskeramiken statt.
Um die Konzentrationen der Farbkomplexe zu verringern, ist es vorteilhaft, die Keimbildungs- und Kristallisationszeiten zu verkürzen. Dem steht entgegen, dass die Verkürzung der Keimbildungszeit zu verstärkter Lichtstreuung und die Verkürzung der Kristallisationszeit zu Unebenheiten des Artikels führen können.

Gegenwärtige kommerzielle transparente Glaskeramiken bilden bezüglich der Forderungen nach Wirtschaftlichkeit und Farbe einen Kompromiss. Die $Fe_2O_3$-Gehalt liegen in der Regel bei Werten von 150 ppm. Wegen der Kosten eisenarmer Rohstoffe wäre es wirtschaftlich vorteilhaft, auch höhere $Fe_2O_3$-Gehalte zu erlauben.
Um ausreichende Keimbildung sicherzustellen, sind auch Mindestgehalte des Keimbildners $TiO_2$ erforderlich, da dieser Keimbildner nur mit Nachteilen bei Schmelze und Formgebung durch die alternativen Keimbildner $ZrO_2$ und $SnO_2$ ersetzt werden kann.

Ein weiteres wesentliches Merkmal der LAS-Glaskeramiken ist die Streuung, die durch die Größe der Kristalle, deren Doppelbrechung und den Unterschied der Brechzahlen von Kristallen und Restglas bestimmt wird. Durch ausreichende Mengen der Keimbildner sowie ausreichende Keimbildungszeiten während der Keramisierung wird eine hohe Keimdichte erreicht, die dazu führt, dass die aufwachsenden Hochquarz-Mischkristalle mit ihrer Größe unterhalb des Bereiches der Wellenlänge des sichtbaren Lichtes liegen. Typischerweise liegt die mittlere Kristallitgröße der Hochquarz-Mischkristalle im Bereich von 20 nm bis 50 nm. Für die gewünschte geringe Streuung sind, wie aus dem Artikel "Nanophase Glass-Ceramics" im Journal of the American Ceramic Society, Vol. 82, No. 1, pp. 5-16; 1999 von den Autoren Beall und Pickney als Bedingungen für hohe Transparenz von LAS-Glaskeramiken bekannt, weiterhin geringe Doppelbrechung der Kristalle und eine gute Anpassung der Brechungsindizes von Kristallen und Restglasphase erforderlich.

Der Brechungsindex der Restglasphase wird durch ihre Zusammensetzung und die Abkühlrate bei der Keramisierung eingestellt.

Bei einer nur geringen Streuung wird die Durchsicht nicht verfälscht, und die Anzeigen sind klar und deutlich sichtbar.

Absorption und Streuung sind daher die optischen Phänomene, die auch bei einer wirtschaftlichen Herstellung beherrscht werden müssen.

Die Helligkeit oder Lichttransmission wird beschrieben durch den Helligkeitswert Y (brightness) gemäß dem CIE-Normfarbsystem oder den L* Wert im CIELAB Farbsystem. Die deutsche Umsetzung der internationalen CIE-Norm ist in der DIN 5033 festgelegt. Das CIELAB Farbmodell ist in der DIN EN ISO 11664-4 "Colorimetry -- Part 4: CIE 1976 L*a*b* Colour space" genormt.

Es hat sich bei Glaskeramiken eingebürgert, als Maß für die Farbe die Größe c* (Buntheit) aus dem CIELAB Farbsystem mit den Koordinaten L* a*, b* heranzuziehen, gemäß der Berechnung:

$$c^* = \sqrt{(a^*)^2 + (b^*)^2}$$

Die Koordinaten des CIELAB Farbsystems lassen sich in bekannter Weise aus den Farbkoordinaten und der Helligkeit Y des CIE Farbsystems berechnen. Die Bestimmung des c*- Wertes der Proben erfolgt aus den durchgeführten spektralphotometrischen Messungen der Transmission mit den gewählten Parametern für Normlichtart und Beobachterwinkel.

Die dafür erforderlichen spektralphotometrischen Messungen erfolgen im Rahmen der Erfindung an polierten Proben in einem Spektralbereich zwischen 380 und 780 nm. Aus den gemessenen spektralen Werten in dem Bereich, der das sichtbare Lichtspektrum repräsentiert, wird die Lichttransmission mit Wahl von Normlichtart und Beobachterwinkel für die vorliegende Dicke berechnet.

Die Streuung der Glaskeramiken wird durch Messung der Trübung (engl. haze) bestimmt. Trübung ist nach ASTM D1003-13 der prozentuale Anteil durchgelassenen Lichts, der vom eingestrahlten Lichtbündel im Mittel um mehr als 2,5° abweicht.

Die großtechnische Herstellung transparenter Glaskeramiken erfolgt in mehreren Stufen. Zunächst wird das kristallisierbare Ausgangsglas aus einem Gemisch aus Scherben und pulverförmigen Gemengerohstoffen geschmolzen und geläutert. Die Glasschmelze erreicht dabei Temperaturen von 1550 °C bis maximal 1750 °C, meist bis zu 1700 °C. Fallweise wird auch eine Hochtemperaturläuterung oberhalb 1750 °C, üblicherweise bei Temperaturen um 1900 °C eingesetzt.

Die Gemengerohstoffe für transparente, nicht eingefärbte kristallisierbare LAS-Gläser bestehen hauptsächlich aus Oxiden, Hydroxiden, Karbonaten, Nitraten. Bei dem Schmelzen des Gemenges laufen sehr verschiedenartige Reaktionen ab, die zur Glasbildung führen. Eine Beschreibung dieser Reaktionen findet sich in dem Buch "Allgemeine Technologie des Glases, Grundlagen des Schmelzens und der Formgebung", Prof. Dr. H. A. Schaeffer, Erlangen September 1985. Diese Reaktionen gliedern sich mit aufsteigender Temperatur allgemein in:

- Dehydratisierung
- Festkörperreaktionen im Bereich der Kornkontakte (z.B. Silicatbildung)
- Bildung karbonatischer Schmelzen, die die Quarzkörner umhüllen
- Zersetzungsreaktionen, die Blasen erzeugen ($H_2O$, $CO_2$, $NO_x$, $O_2$, $N_2$, $SO_2$)
- Bildung silikatischer Schmelzen

Anschließend findet die Auflösung der restlichen Bestandteile des Gemenges in der silikatischen Schmelze statt.

Diese Reaktionsschritte laufen auch bei den üblichen Rohstoffversätzen für das Gemenge der kristallisierbaren Ausgangsgläser von (LAS)-Glaskeramiken ab. Hauptbestandteile sind hier in der Regel Quarzsand oder -mehl als Quelle für die $SiO_2$-Glaskomponente, Aluminiumoxid oder Aluminiumtrihydroxid als Quelle für die $Al_2O_3$-Komponente und Lithiumkarbonat als Quelle für die $Li_2O$-Komponente. Mit der Wahl dieser Rohstoffe ist es möglich, einen geringen Verunreinigungsgehalt an färbendem Eisen von weniger als 200 und sogar weniger als 150 ppm $Fe_2O_3$ im Glas zu vertretbaren Kosten bereitzustellen. Entscheidend für das Einschmelzen ist die Bildung eines Eutektikums aus den Hauptbestandteilen $Li_2O$ und $SiO_2$ bei ca. 1030 °C. In dieser ersten flüssigen lithiumreichen Silikatphase beginnen sich die restlichen kristallinen Rohstoffe wie Aluminiumoxid, Quarz, Zirkon, das Läutermittel zu lösen.
Diese Rohstoffe sind aufgrund ihrer hohen Schmelztemperaturen auch die letzten Gemengerohstoffe, die in der Glasschmelze gelöst werden. Sie sind diejenigen Rohstoffe die die Schmelzzeit und -temperatur und damit den erforderlichen Energiebedarf bestimmen. Bei zu hohen Wannendurchsätzen besteht die Gefahr von Gemengerelikten im Glas.

In der Glasindustrie ist bekannt, dass die Verwendung der lithiumhaltigen Minerale Eukryptit, Spodumen oder Petalit bei der Massenglasherstellung Vorteile gegenüber Lithiumkarbonat hat (Haigh et al. "The Lithium Minerals Industry, Glass Dec. 1989), weil sie im Gegensatz zu schwer löslichem Quarz eine lösliche Siliziumoxidquelle bereitstellen. In der Schrift wird ausgeführt, dass auch die Komponente $Al_2O_3$ durch diese mineralischen Rohstoffe eingeführt wird. Die Kostenvorteile gegenüber Lithiumkarbonat werden beschrieben. Während die mineralischen Lithium-Rohstoffe durch übliche bergmännische Verfahren gewonnen und aufbereitet werden, muss das Lithiumkarbonat durch chemische Reaktionen aus den Mineralen oder durch Lösen und Auskristallisation aus lithiumhaltigen Salzlagerstätten gewonnen werden. In Tabelle 5 dieser Veröffentlichung sind Verunreinigungen angegeben. Der $Fe_2O_3$-Gehalt der verschiedenen Petalit- und Spodumen-Rohstoffe liegt zwischen 300 bis 1000 ppm und höher. In der Tabelle wird dagegen ein Lithiumkarbonat-Rohstoff mit einem $Fe_2O_3$-Gehalt von höchstens 40 ppm angegeben.
Die Vorteile der mineralischen Lithiumrohstoffe gegenüber Lithiumkarbonat bei der Schmelze, der Produktionseffizienz und den Kosten werden auch in der Veröffentlichung "Lithium minerals review 2002", Glass 2002 beschrieben. Allerdings wird auf den Nachteil der Färbung durch die hohen Eisengehalte hingewiesen.

Der Einsatz von mineralischen Lithiumrohstoffen an Stelle von Lithiumkarbonat verbessert also das Einschmelzen der Gemengerohstoffe, verringert die Bildung von schwer löslichen Quarz- oder Aluminiumoxidrelikten und ermöglicht eine schnellere Homogenisierung des Glases, ähnlich wie der Zusatz von Scherben. Insgesamt resultieren die gewünschten Vorteile beim Wannendurchsatz und/oder beim Energiebedarf. Wenn bei transparenten LAS-Glaskeramiken eine geringe Farbe gewünscht ist, muss für einen Einsatz dieser Rohstoffe allerdings eine Lösung für die hohen Eisengehalte gefunden werden.

Bei dem nachfolgenden Prozessschritt der Läuterung unterstützt man das Bestreben der Gasblasen, durch ihren statischen Auftrieb infolge des Dichteunterschiedes in der Glasschmelze aufzusteigen und dann ins Freie zu entweichen. Dieser Vorgang braucht ohne unterstützende Läutermaßnahmen jedoch eine beträchtliche Zeit, die den Produktionsprozess wegen langer Standzeiten und daraus resultierendem geringem Wannendurchsatz verteuern würde.

Für transparente Glaskeramiken sind Arsen- und Antimonoxid bei konventionellen Läutertemperaturen von 1550 bis 1700 °C hinsichtlich guter Blasenqualitäten technisch und wirtschaftlich bewährte Läutermittel. Zunehmend wird als umweltfreundlicher Ersatz für Arsen- und Antimonoxid das Läutermittel $SnO_2$ allein oder in Kombination mit einem oder mehreren Läuterzusätzen wie Halogeniden (F, Cl, Br), $CeO_2$ $MnO_2$, $Fe_2O_3$, Schwefelverbindungen propagiert.

Generell kommt dem Verfahrensschritt des Schmelzens der Gemengebestandteile und der Läuterung besondere Bedeutung zu, um ein kristallisierbares Glas mit der geforderten Homogenität und Blasenqualität zu erhalten. Für eine wirtschaftliche Herstellung sind hohe Wannendurchsätze mit den geforderten Blasenqualitäten maßgeblich. Der Energiebedarf für die Herstellung einer definierten Menge von spezifikationsgerechtem Glas ist eine wichtige Kennzahl für die wirtschaftliche Produktion verbunden mit einem reduzierten Eintrag des Treibhausgases $CO_2$ in die Atmosphäre. Diese Zielsetzung entspricht der europäischen Direktive Nr. 406/2009/EG des EUROPÄISCHEN PARLAMENTS und des RATES vom 23. April 2009 zur Reduzierung von Treibhausgasen. Hier ist anzumerken, dass Lithiumkarbonat neben seinen hohen Kosten auch den zusätzlichen Nachteil hat, eine Quelle von $CO_2$ zu sein.

Nach dem Einschmelzen und Läutern erfährt das Glas üblicherweise eine Heißformgebung durch Gießen, Pressen, Walzen oder Floaten. Für viele Anwendungen werden die Glaskeramiken in flacher Form benötigt, beispielsweise in Form von Platten. Das Walzen und Floaten wird zur Herstellung der Platten eingesetzt. Für die wirtschaftliche Herstellung dieser LAS-Gläser sind eine niedrige Schmelztemperatur und eine niedrige Verarbeitungstemperatur $V_A$ bei der Heißformgebung gewünscht. Weiterhin darf das Glas bei der Formgebung keine Entglasung zeigen, das heißt, es dürfen sich keine größeren Kristalle oberhalb von etwa 5 $\mu$m bilden, da sie in den Glaskeramik-Artikeln die Festigkeit erniedrigen oder visuell störend sind. Da die Formgebung in der Nähe der Verarbeitungstemperatur $V_A$ (Viskosität $10^4$ dPas) des Glases stattfindet, muss gewährleistet sein, dass die obere Entglasungstemperatur der Schmelze in der Nähe und bevorzugt unter der Verarbeitungstemperatur liegt, um die Bildung größerer Kristalle zu vermeiden. Der bei der Formgebung über Walzen kritische Bereich ist der Kontakt der Glasschmelze mit der Ziehdüse aus Edelmetall (üblicherweise aus einer Pt/Rh-Legierung), bevor das Glas durch die Walzen geformt und abgekühlt wird. Beim Floaten sind es der Glaskontakt mit der spout lip und der vordere Bereich des Floatbades im Kontakt mit dem flüssigen Sn, in dem das Glas eine hohe Kristallwachstumsgeschwindigkeit besitzt.

Das kristallisierbare LAS-Glas wird in einem anschließenden Temperaturprozess durch gesteuerte Kristallisation (Keramisierung) in die Glaskeramik umgewandelt. Diese Keramisierung erfolgt in einem zweistufigen Temperaturprozess, bei dem zunächst durch Keimbildung bei einer Temperatur zwischen 680 °C und 800 °C Keime, üblicherweise aus $ZrO_2$/$TiO_2$-Mischkristallen, erzeugt werden. Die Hochquarz-Mischkristalle wachsen bei erhöhter Temperatur auf diesen Keimen auf. Bei der maximalen Herstelltemperatur um etwa 900 °C wird das Gefüge der Glaskeramik homogenisiert und die optischen, physikalischen und chemischen Eigenschaften eingestellt. Für eine wirtschaftliche Herstellung sind kurze Keramisierungszeiten vorteilhaft.

Die weitere Umwandlung in Keatit-Mischkristalle erfolgt bei Temperaturerhöhung in einem Temperaturbereich von ca. 950 °C bis 1250 °C. Mit der Umwandlung erhöht sich der thermische Ausdehnungskoeffizient der Glaskeramik, und durch weiteres Kristallwachstum und damit einhergehende Lichtstreuung wandelt sich das transparente in transluzentes bis opakes Aussehen um.

Für die Hochquarz-Mischkristalle finden sich in der Literatur auch die Synonyme "β-Quarz" oder "β-Eukryptit" und für die Keatit-Mischkristalle "β-Spodumen" als Bezeichnung für die Kristallphasen.

Aktuelle Entwicklungen bei transparenten LAS-Glaskeramiken zielen meist in die Richtung, die Farbe bei niedrigen $Fe_2O_3$-Gehalten von 100 bis 200 ppm zu optimieren. Dabei wird Lithiumkarbonat als Gemengerohstoff verwendet.

Die Schrift EP 1837312 A1 beschreibt die physikalische Entfärbung von transparenten Glaskeramiken mit Hochquarz-Mischkristallen als Hauptkristallphase durch Zusätze von 0,01 - 0,4 Gew.-% $Nd_2O_3$. Das Prinzip des physikalischen Entfärbens beruht darauf, dass die vorhandenen Absorptionsbanden durch komplementäre Absorptionsbanden des Entfärbemittels neutralisiert werden. Dies führt naturgemäß zu stärkerer Absorption des Lichts und erniedrigt damit die Helligkeit. Um günstige Fertigungsbedingungen, d.h. niedrige Schmelz- und niedrige Formgebungstemperaturen zu erreichen, enthalten die Beispielgläser dieser Schrift hohe Gehalte der viskositätsabsenkenden Komponente MgO von 0,58 bis 1,2 Gew.-%, die für eine geringe Farbe nachteilig sind. Die Schrift gibt keinen Hinweis auf den Einsatz von mineralischen Rohstoffen wie Petalit oder Spodumen als Quelle für die Komponente $Li_2O$. Die $Fe_2O_3$-Gehalte der Beispiele legen nahe, dass Lithiumkarbonat verwendet wurde.

Die Ansätze, den für die Farbkomplexe in Glaskeramiken mit verantwortlichen Keimbildner $TiO_2$ zu vermeiden (WO 2008/065167 A1) oder zu begrenzen (WO 2008/065166 A1), haben bisher nicht zu einer technischen Umsetzung geführt. Die erforderlichen höheren Gehalte der alternativen Keimbildner $ZrO_2$ und/oder $SnO_2$ führen zu Nachteilen bei der Schmelze und Formgebung, wie höhere Schmelz- und Formgebungstemperaturen sowie unzureichende Entglasungsfestigkeit bei der Formgebung. Die Schrift gibt keinen Hinweis auf den Einsatz von mineralischen Rohstoffen wie Petalit oder Spodumen als Quelle für die Komponente $Li_2O$.

Die Schrift WO 2019/049785 A1 beschreibt die Optimierung der Farbe, indem ein hochreiner Rohstoff für $ZrO_2$ eingesetzt wird und dadurch die Gehalte an färbenden Verunreinigungen wie Fe, V, Cr, Selten Erden und Actiniden vermindert werden. Die offenbarten $Fe_2O_3$-Gehalte von 120 ppm legen die Verwendung von Lithiumkarbonat nahe.

Die WO 2007/139068 A1 beschreibt transparente oder opak weiße LAS-Glaskeramiken, die befähigt sind, große Mengen an Recycling-Material als Scherben bei der Schmelze aufzunehmen. Durch die Dekorierung des Recycling-Materials mit anorganischen Pigmenten werden deren Bestandteile, Oxide von Fe, Ni, Cr, Co und Mn, in die LAS-Glaskeramik eingebracht. Abhängig von der jeweiligen Dekorierung des eingesetzten Recycling-Materials betragen die Gehalte 50 bis 500 ppm $Fe_2O_3$; 5 bis 100 ppm CoO + $Cr_2O_3$ + NiO + MnO; und 0 bis 70 ppm CoO + NiO. Die damit einhergehende Einfärbung der Glaskeramik wird vermindert durch die Wahl der Gehalte der Komponenten $TiO_2$, ZnO und MgO. Die Schrift gibt keinen Hinweis auf den Einsatz von mineralischen Rohstoffen wie Petalit oder Spodumen als Quelle für die Komponente $Li_2O$ und legt die Verwendung von Lithiumkarbonat nahe, da in den Beispielen auch niedrige $Fe_2O_3$-Gehalte von 100 oder 200 ppm offenbart sind. Bis auf Beispiel 2 mit 100 ppm $Fe_2O_3$ verfügen die Beispiele über starke Farbe mit Werten der Buntheit c* über 9 für 4 mm dicke Proben. Dies ist erkennbar an den angegebenen Farbkoordinaten a*, und b*.

In der Schrift WO 2018/211216 A1 wird ein Verfahren zur Herstellung eines LAS-Glaskeramikartikels beschrieben, bei dem der natürliche Rohstoff Petalit als Gemengerohstoff und Quelle für die Komponente $Li_2O$ verwendet wird. Durch die Verminderung der schwer löslichen Rohstoffe für die Komponenten $Al_2O_3$ und $SiO_2$ wird das Schmelzen und Läutern verbessert. Nachteilig ist die Beschränkung auf reine Petalit-Qualitäten mit einem $Fe_2O_3$-Gehalt von höchstens 200 ppm. Solche eisenarmen Petalit-Qualitäten sind, wenn überhaupt, nur begrenzt verfügbar und dies zu höheren Kosten. Die Schrift sagt nichts aus über den $Fe_2O_3$-Gehalt des Glaskeramikartikels und dessen Farbe. Da der hauptsächliche Eintrag der Fe-Verunreinigung über den natürlichen Rohstoff Petalit geschieht, ist anzunehmen, dass der $Fe_2O_3$-Gehalt des Glaskeramikartikels unter 200 ppm liegt.

Bei der Entwicklung von transparenten LAS-Glaskeramikartikeln besteht daher Bedarf, ein ganzes Bündel von gegenläufigen Forderungen an Glas und Glaskeramik, wie kostengünstige Rohstoffe, günstige und umweltfreundliche Fertigungseigenschaften ohne Nachteile bei der Produktqualität des Glaskeramikartikels, wie insbesondere Farbe, Helligkeit sowie geringe Streuung bei kurzen Keramisierungszeiten zu vereinbaren.

Der Erfindung liegt die Aufgabe zugrunde, einen transparenten Lithiumaluminiumsilikat-Glaskeramikartikel zu finden,

- der aus kostengünstigen Rohstoffen herstellbar ist,
- günstige Fertigungseigenschaften für eine wirtschaftliche und umweltfreundliche Herstellung besitzt,
- der Hochquarz-Mischkristalle als Hauptkristallphase enthält,
- wobei der transparente Glaskeramikartikel eine geringe Farbe, eine hohe Helligkeit und eine geringe Streuung aufweisen soll und kurze Keramisierungszeiten angestrebt werden.

Diese Aufgabe wird mit einem transparenten Lithiumaluminiumsilikat-Glaskeramikartikel mit den Merkmalen des Patentanspruchs 1 gelöst.

Es ist auch Aufgabe der Erfindung, ein Verfahren zur Herstellung des Glaskeramikartikels und Verwendungen für ihn zu finden. Diese Aufgaben werden durch die weiteren unabhängigen Ansprüche gelöst.

Der erfindungsgemäße transparente, nicht eingefärbte Lithiumaluminiumsilikat-Glaskeramikartikel mit Hochquarz-Mischkristallen als Hauptkristallphase enthält im Wesentlichen die folgenden Komponenten (in Gew.-% auf Oxidbasis):

$Li_2O$ 3 - < 4,5
$Al_2O_3$ 19 - 24
$SiO_2$ 62 - 70
$Na_2O$ 0-1,5
$K_2O$ 0 - 1,5
MgO 0,01 - <0,5
CaO 0-1,5
SrO 0-1,5
BaO 0 - 3
ZnO 0 - 3
$TiO_2$ > 1,6-2,8
$ZrO_2$ 1 - < 2,5
$P_2O_5$ 0 - < 4
$Fe_2O_3$ 0,025 - 0,065
$MnO_2$ 0,002 - 0,05

und mit mindestens einem Läutermittel, ausgewählt aus der Gruppe $AS_2O_3$ und/oder $SnO_2$ in Gehalten bis zu 2 Gew.-%, wobei der Glaskeramikartikel, gemessen bei 4 mm Dicke mit Normlicht D65, 2° über eine Buntheit c* von größer 3 bis 7 verfügt.

$Li_2O$, $Al_2O_3$ und $SiO_2$

Die Oxide $Li_2O$, $Al_2O_3$ und $SiO_2$ in den angegebenen Grenzen sind bzw. werden notwendige Bestandteile der Hochquarz-Mischkristallphasen in dem transparenten Glaskeramikartikel.

Für den Glaskeramikartikel soll der Gehalt $Li_2O$ mindestens 3 bis weniger als 4,5 Gew.-% betragen. Der Mindestgehalt ist erforderlich, um die gewünschte niedrige thermische Ausdehnung der Glaskeramik mit Hochquarz-Mischkristallen als Hauptkristallphase zu erreichen. Höhere Gehalte als 4,5 Gew.-% sind hinsichtlich der gewünschten niedrigen Buntheit c* des Glaskeramikartikels nachteilig. Bevorzugt beträgt der $Li_2O$-Gehalt weniger als 4,3 Gew.-%, weiter bevorzugt weniger als 4,1 Gew.-% und besonders bevorzugt weniger als 4 Gew.-%. Der Mindestgehalt beträgt bevorzugt 3,2 und besonders bevorzugt 3,4 Gew.-%. Ein besonders bevorzugter Bereich ist 3,2 bis weniger als 4 Gew.-%. Für die Einführung des $Li_2O$ sind kostengünstige mineralische Rohstoffe wie Spodumen und/oder Petalit und/oder Eukryptit gegenüber dem üblichen Lithiumkarbonat bevorzugt. Diese mineralischen Rohstoffe bringen auch die Hauptkomponenten $Al_2O_3$ und $SiO_2$ mit.

Der Gehalt an $Al_2O_3$ beträgt 19 - 24 Gew.-%. Höhere Gehalte als 24 Gew.-% sind nachteilig wegen der Neigung zu Entglasung von Mullit bei der Formgebung. Weiter hat sich gezeigt, dass mit höheren Gehalten die Streuung bei kurzen Keramisierungszeiten zunimmt. Bevorzugt ist daher ein Anteil von weniger als 23 Gew.-%. Der Mindestgehalt beträgt 19 Gew.-%, weil $Al_2O_3$ für eine geringe Buntheit c* der Glaskeramik von Vorteil ist. Der $Al_2O_3$-Mindestgehalt beträgt bevorzugt mindestens 20 Gew.-%.

Der Gehalt der Hauptkomponente $SiO_2$ soll mindestens 62 Gew.-% betragen, weil dies für die geforderten Eigenschaften des Glaskeramikartikels, wie z.B. niedrige thermische Ausdehnung und chemische Beständigkeit vorteilhaft ist. Darüber hinaus wird die Streuung bei kurzen Keramisierungszeiten verringert. Besonders vorteilhaft ist ein Mindestgehalt von 64 Gew.-%. Der $SiO_2$-Gehalt soll maximal 70 Gew.-% betragen, weil diese Komponente die Verarbeitungstemperatur des Glases und die Schmelztemperatur erhöht. Bevorzugt beträgt der $SiO_2$-Gehalt maximal 68 Gew.-%.

Keimbildner $TiO_2$, $ZrO_2$

Die Komponente $TiO_2$ ist als wirksamer Keimbildner unverzichtbar für die Transparenz der Glaskeramik in Verbindung mit günstigen Fertigungseigenschaften. Daher beträgt der Mindestgehalt mehr als 1,6 Gew.-%. Dieser Mindestgehalt ermöglicht hohe Keimbildungsraten und damit auch bei kurzen Keramisierungszeiten eine ausreichende Bildung von Keimen, die eine niedrige mittlere Kristallitgröße begünstigen. Damit ist es möglich, auch bei kurzen Keramisierungszeiten Glaskeramiken ohne visuell störende Streuung zu erhalten.

Höhere $TiO_2$-Gehalte sind aber aufgrund der Bildung von Fe/Ti-Farbkomplexen kritisch. Daher sollte der

$TiO_2$-Anteil nicht mehr als 2,8 Gew.-% betragen. Bevorzugt ist ein minimaler $TiO_2$-Gehalt von 1,8 Gew.-%. Dieser Mindestgehalt ist für die Verringerung der Keramisierungszeiten vorteilhaft, um Streuung zu vermeiden. Besonders bevorzugt ist ein $TiO_2$-Gehalt von mehr als 2 Gew.-%.

Bevorzugt sind höchstens 2,6 Gew.-% $TiO_2$ enthalten, um die Farbwirkung zu begrenzen.

Als weiterer Keimbildner ist $ZrO_2$ vorgesehen. Der $ZrO_2$-Gehalt beträgt 1 Gew.-% bis weniger als 2,5 Gew.-%. Bevorzugt ist der $ZrO_2$-Gehalt auf weniger als 2,2 Gew.-% und weiter bevorzugt auf weniger als 2 Gew.-% begrenzt, da höhere Gehalte das Einschmelzverhalten des Gemenges bei der Glasherstellung verschlechtern und es bei der Formgebung zur Entglasung durch Bildung von Zrhaltigen Kristallen kommen kann. Da die Komponente hilft, höhere Gehalte des alternativen Keimbildner $TiO_2$ zu vermeiden, ist sie für die Bereitstellung eines Glaskeramikartikels mit niedriger Buntheit c* von Vorteil. Der $ZrO_2$-Mindestgehalt beträgt bevorzugt 1,6 Gew.-%.

MgO

Eine weitere Schlüsselkomponente für das Erreichen der gewünschten Eigenschaften des Glaskeramikartikels ist der MgO-Gehalt. Die Komponente MgO ist sowohl Bestandteil der Mischkristalle als auch der Restglasphase und hat daher starken Einfluss auf viele Eigenschaften. Die Komponente erniedrigt die Schmelz- und Verarbeitungstemperatur des Glases und begünstigt daher die wirtschaftliche Herstellung. Der MgO-Gehalt soll 0,01 Gew.-% bis weniger als 0,5 Gew.-% betragen. Der MgO-Gehalt beträgt mindestens 0,01 Gew.-%, bevorzugt mindestens 0,05 Gew.-%, weiter bevorzugt mindestens 0,1 Gew.-% und besonders bevorzugt mindestens 0,15 Gew.-%. In dem transparenten Glaskeramikartikel mit Hochquarz-Mischkristallen als Hauptkristallphase führt MgO zu einer besonders nachteiligen Verstärkung der Farbe und einer Verringerung der Helligkeit. Dies wird der Begünstigung der Ausbildung von absorbierenden Fe/Ti-Farbkomplexen zugeschrieben.

Der MgO-Gehalt soll weniger als 0,5 Gew.-%, bevorzugt höchstens 0,4 Gew.-% und besonders bevorzugt höchstens 0,35 Gew.-% betragen. In einem bevorzugten MgO-Wertebereich von 0,05 Gew.-% bis 0,4 Gew.-% lassen sich die Anforderungen an geringe Farbe (Buntheit c*) des Glaskeramikartikels und niedriger Verarbeitungstemperatur des kristallisierbaren Glases besonders gut miteinander verbinden.

$Na_2O$ und $K_2O$

Die Alkalien $Na_2O$ und $K_2O$ erniedrigen die Schmelztemperatur und die Verarbeitungstemperatur bei der Formgebung des Glases. Das Einschmelzen der schwer löslichen Rohstoffe für $ZrO_2$ und $SiO_2$ wird beschleunigt. Die Gehalte müssen bei beiden auf maximal 1,5 Gew.-% begrenzt werden. Zu hohe Gehalte sind nachteilig, weil sie die Farbe durch verstärkte Bildung der Fe/Ti-Farbkomplexe begünstigen und wirken sich ungünstig auf die Zeit-/Temperaturbelastbarkeit des Glaskeramikartikels aus.

Der $Na_2O$-Gehalt kann 0 Gew.-% sein. Er ist bevorzugt > 0 Gew.-%, weiter bevorzugt enthält das Glas mindestens 0,05 Gew.-% $Na_2O$ und besonders bevorzugt mindestens 0,1 Gew.-%. Der maximale Anteil beträgt vorzugsweise 1,5 Gew.-%, weiter bevorzugt 1 Gew.-% und insbesondere 0,9 Gew.-%. Vorzugsweise beträgt der $Na_2O$-Anteil 0,1 Gew.-% bis 1 Gew.-%.

Der $K_2O$-Gehalt kann 0 Gew.-% sein. Er ist bevorzugt > 0 Gew.-%, weiter bevorzugt enthält das Glas mindestens 0,05 Gew.-% $K_2O$ und besonders bevorzugt mindestens 0,1 Gew.-%. Der maximale Anteil beträgt vorzugsweise 1,5 Gew.-%, weiter bevorzugt 1 Gew.-% und insbesondere 0,9 Gew.-%. Vorzugsweise beträgt der $K_2O$-Anteil 0,1 bis 1 Gew.-%.

In einer bevorzugten Ausführung gilt 0,2 Gew.-% $\leq Na_2O + K_2O \leq$ 1,5 Gew.-%. Die Summe der Alkalien $Na_2O + K_2O$ beträgt weiter bevorzugt maximal 1,2 Gew.-% und besonders bevorzugt weniger als 1 Gew.-%. Bei höheren Gehalten wirken sich die erfindungsgemäßen $Fe_2O_3$-Gehalte stärker auf die Farbe aus. Die Summe der Alkalien $Na_2O + K_2O$ beträgt weiter bevorzugt mindestens 0,3 und besonders bevorzugt mehr als 0,4 Gew.-%, um die Schmelzbarkeit weiter zu verbessern und die Verarbeitungstemperatur zu erniedrigen.
Besonders bevorzugt gilt 0,4 Gew.-% < $Na_2O + K_2O$ < 1 Gew.-%.

Erdalkalien

Die Komponente CaO hat sich als vorteilhaft erwiesen, um die Verarbeitungstemperatur $V_A$ abzusenken und die Entglasungsfestigkeit des Glases bei der Herstellung der Glaskeramikartikel zu verbessern. Sie führt allerdings zu einer erhöhten Farbe und Streuung bei kurzen Keramisierungszeiten. CaO ist in Gehalten von maximal 1,5 Gew.-%, bevorzugt maximal 0,8 Gew.-% enthalten. Besonders bevorzugt ist die Obergrenze für den CaO-Gehalt von weniger als 0,6 Gew.-%, um die Streuung bei kurzen Keramisierungszeiten zu minimieren. Der CaO-Gehalt kann 0 Gew.-% sein. Bevorzugt ist CaO eine Komponente des kristallisierbaren Glases und des Glaskeramikartikels. Sein Gehalt beträgt also bevorzugt > 0 Gew.-%, bevorzugter ≥ 0,05 Gew.-%, weiter bevorzugt mindestens 0,1 Gew.-% und besonders bevorzugt mindestens 0,2 Gew.-%. Ein bevorzugter Bereich ist 0,05 Gew.-% bis 0,8 Gew.-%.

Der BaO-Gehalt beträgt vorzugsweise bis 3 Gew.-% und der SrO-Gehalt vorzugsweise bis 1,5 Gew.-%. Der BaO-Gehalt beträgt bevorzugt bis 2 Gew.-% und der SrO-Gehalt bevorzugt bis 1 Gew.-%. Der BaO-Gehaltkann 0 Gew.-% betragen, bevorzugt beträgt er mehr als 0 Gew.-% und weiter bevorzugt wenigstens 0,2 Gew.-%.

Ein bevorzugter Bereich für BaO ist 0,2 Gew.-% bis 2 Gew.-%.

Der SrO-Anteil beträgt kann 0 Gew.-% betragen. Bevorzugt beträgt er mehr als 0 Gew.-%, insbesondere ≥ 0,02 Gew.-%.

Ein bevorzugter Bereich für SrO ist 0,02 Gew.-% bis 1 Gew.-%.

Um den Brechungsindex der Restglasphase einzustellen und dem der Hochquarz-Mischkristalle anzunähern, ist es vorteilhaft, wenn das kristallisierbare Glas und der daraus hergestellte Glaskeramikartikel CaO und/oder SrO enthält. Die Summe der Erdalkalioxide CaO und SrO beträgt dann vorzugsweise wenigstens 0,05 Gew.-%, bevorzugt wenigstens 0,1 Gew.-% und besonders bevorzugt wenigstens 0,2 Gew.-%. Sie beträgt höchstens 1,2 Gew.-%, weiter bevorzugt höchstens 1 Gew.-% und besonders bevorzugt höchstens 0,8 Gew.-%, da sonst die Streuung wieder zunimmt. Die Glaskeramik soll diese Komponenten mit den angegebenen Grenzen als Restglasbestandteile enthalten. CaO und SrO sind als Bestandteile der Restglasphase für geringe Entglasungsneigung und geringe Streuung vorteilhaft. Besonders bevorzugt gilt 0,1 Gew.-% ≤ CaO + SrO ≤ 1 Gew.-%.

ZnO

Die Komponente ZnO ist vorteilhaft für die Erniedrigung der Schmelz- und Verarbeitungstemperatur des Glases und für verminderte Streuung bei kurzen Keramisierungszeiten. ZnO wird in die Mischkristallphasen eingebaut, und ein Teil verbleibt auch in der Restglasphase. Die Komponente führt vergleichbar der Komponente $Li_2O$ zu einer Verringerung der thermischen Ausdehnung des Glaskeramikartikels. Hinsichtlich Streuung ist vorteilhaft, dass ZnO die Anisotropie der Hochquarz-Mischkristalle vermindert. Das heißt, die Unterschiede zwischen der a- und c-Achse der Kristalle werden vermindert. Es ist naheliegend, dass dadurch die Doppelbrechung der Kristalle vermindert wird. Der ZnO-Gehalt ist wegen zunehmender Entglasungsneigung und der Bildung unerwünschter Kristallphasen wie Gahnit auf Werte von höchstens 3 Gew.-% begrenzt. Bevorzugt ist ein ZnO-Gehalt von höchstens 2,5 Gew.-% und besonders bevorzugt von höchstens 2,0 Gew.-%. Der ZnO-Gehalt kann 0 Gew.-% betragen oder bevorzugt > 0 Gew.-% sein. Bevorzugt ist ein Mindestgehalt von 0,1, weiter bevorzugt 0,5 und besonders bevorzugt mehr als 1 Gew.-%. Der ZnO-Gehalt soll vorzugsweise 0,1 Gew.-% bis 2,5 Gew.-% betragen.

$P_2O_5$

Zusätze können zur Verbesserung der Schmelzbarkeit und Entglasungsfestigkeit beitragen. Höhere Gehalte sind nachteilig für die chemische Beständigkeit insbesondere die Säurebeständigkeit des Glaskeramikartikels. Das kristallisierbare Glas und der daraus hergestellte Glaskeramikartikel sollen weniger als 4 Gew.-% $P_2O_5$ enthalten. Der Gehalt an $P_2O_5$ kann 0 Gew.-% betragen oder bevorzugt > 0 Gew.-% sein. Eine bevorzugte Untergrenze liegt bei 0,01 Gew.-% und besonders bevorzugt bei 0,02 Gew.-%. Eine bevorzugte Obergrenze liegt bei 2 Gew.-% $P_2O_5$, weiter bevorzugt bei weniger als 1,3 und besonders bevorzugt weniger als 1 Gew.-%.
Ein bevorzugter Bereich ist 0,01 Gew.-% bis < 1,3 Gew.-%.

$Fe_2O_3$

Die erfindungsgemäße Zusammensetzung toleriert bezüglich der Farbe und Helligkeit höhere Gehalte an $Fe_2O_3$, weil die Bildung der Fe/Ti-Farbkomplexe verringert ist. Damit besteht eine höhere Flexibilität bei den Gemengerohstoffen, und insbesondere sind die beschriebenen Vorteile der mineralischen Lithiumrohstoffe gegenüber Lithiumkarbonat bei der Schmelze, der Produktionseffizienz und den Kosten nutzbar. Da die mineralischen Lithiumrohstoffe höhere Gehalte an $Al_2O_3$ und $SiO_2$ in gelöster Form enthalten, sind die Anteile von schwer löslichen Quarz und Aluminiumoxid im Gemenge verringert. Das Einschmelzen und die Homogenisierung des Glases wird beschleunigt, und es resultieren Vorteile beim Wannendurchsatz und/oder dem Energiebedarf. Auch der Eintrag von $CO_2$ in die Atmosphäre wie bei der Zersetzung von Lithiumkarbonat ist bei diesen mineralischen Rohstoffen nicht gegeben.
Höhere Gehalte an $Fe_2O_3$ sind vorteilhaft, weil es die Läuterung des Glases unterstützt. Bei der Schmelze in fossil beheizten Wannen kommt dem $Fe^{2+}$-Anteil eine entscheidende Rolle für die Einstellung der Infrarotabsorption der Glasschmelze zu. Der Mindestgehalt schafft gute Absorptionsbedingungen für die Wärmestrahlung der Brenner aus dem Oberbau der Wanne. Damit wird ein guter Wärmeeintrag zur Temperaturerhöhung der Glasschmelze bewirkt. Die Infrarotabsorption der Glasschmelze darf nicht zu hoch sein, damit der Wannenboden nicht zu kalt wird und die Glasschmelze hinreichend homogen in der Tiefe durchwärmt wird. Dies gelingt mit den erfindungsgemäßen Gehalten von mindestens 0,025 Gew.-% bis höchstens 0,065 Gew.-%.

Der $Fe_2O_3$-Gehalt des kristallisierbaren Glases und des daraus hergestellten Glaskeramikartikels soll wenigstens 0,025 Gew.-% betragen. Bevorzugt ist der Mindestgehalt 0,03 Gew.-%, bevorzugt 0,032, bevorzugt 0,035, weiter bevorzugt 0,038 und besonders bevorzugt 0,04 Gew.-%. Andererseits erhöht sich mit dem $Fe_2O_3$-Gehalt auch die Konzentration der Fe/Ti-Farbkomplexe in der Glaskeramik. Die Farbe (Buntheit c*) wird erhöht und durch Absorption wird die Helligkeit Y vermindert. Das kristallisierbare Glas und der daraus hergestellte Glaskeramikartikel sollen deswegen höchstens 0,065 Gew.-%, weiter bevorzugt höchstens 0,055 und besonders bevorzugt bis zu 0,05 Gew.-% an $Fe_2O_3$ enthalten.
Ein bevorzugter Bereich für $Fe_2O_3$ ist 0,03 Gew.-% bis 0,055 Gew.-%.

Mn02

Um eine höhere Flexibilität bei den Gemengerohstoffen zu ermöglichen, soll die Zusammensetzung $MnO_2$ enthalten. Je nach geologischer Herkunft können insbesondere die mineralischen Lithiumrohstoffe signifikante Mengen an Verunreinigungen von $MnO_2$ enthalten. Daher wird die Komponente mit Gehalten von 0,002 bis 0,05 Gew.-% in die Zusammensetzung aufgenommen. Die erfindungsgemäße Zusammensetzung toleriert diese Gehalte bezüglich der Farbe und Helligkeit. Dies wird darauf zurückgeführt, dass $MnO_2$ den Anteil $Fe^{3+}$ gegenüber $Fe^{2+}$ erhöht und dadurch die Bildung der Fe/Ti-Farbkomplexe, die auf benachbarte $Fe^{2+}Ti^{4+}$ Kationen zurückgeführt werden, verringert.
Der Zusatz von $MnO_2$ ist auch günstig, weil dadurch die Läuterung der Glasschmelze unterstützt wird.
Bevorzugt ist der Mindestgehalt 0,005, bevorzugt 0,008, weiter bevorzugt größer als 0,01 und besonders bevorzugt 0,012 Gew.-%. Andererseits erhöht sich mit dem $MnO_2$-Gehalt auch die eigene Farbwirkung in der Glaskeramik. Die Farbe (Buntheit c*) wird erhöht und durch Absorption wird die Helligkeit Y vermindert. Das kristallisierbare Glas und der daraus hergestellte Glaskeramikartikel sollen deswegen höchstens 0,05 Gew.-%, bevorzugt bis zu 0,03 und besonders bevorzugt bis zu 0,025 Gew.-% an $MnO_2$ enthalten.
Ein bevorzugter Bereich für $MnO_2$ ist größer als 0,01 Gew.-% bis 0,03 Gew.-%.

$B_2O_3$, PbO und Fluor

Auch der Zusatz von bis zu 1 Gew.-% $B_2O_3$ verbessert Schmelzbarkeit und Entglasungsfestigkeit, ist aber nachteilig für die Zeit-/Temperaturbelastbarkeit der Glaskeramik. Dies gilt auch für Zusätze von Fluor. Beiden Komponenten ist gemeinsam, dass sie die Stabilität der für die transparente Glaskeramik maßgeblichen Hauptkristallphase Hochquarz-Mischkristalle vermindern und den Übergang in die Keatit-Mischkristallphase begünstigen. Bevorzugt enthält die Glaskeramik weniger als 0,5 und besonders bevorzugt weniger als 0,2 Gew.-% $B_2O_3$. Besonders bevorzugt ist der Glaskeramikartikel technisch frei von $B_2O_3$, das heißt die Gehalte liegen unter 1000 ppm, bevorzugt unter 500 und besonders bevorzugt unter 100 ppm.

Für den Gehalt an Fluor ist eine bevorzugte Obergrenze 0,5 Gew.-%. Weiter bevorzugt soll der Gehalt weniger als 0,2 Gew.-%, weiter bevorzugt weniger als 0,1 Gew.-%, weiter bevorzugt weniger als 500 ppm und besonders bevorzugt weniger als 200 ppm betragen.
Der Zusatz von PbO verbessert Schmelzbarkeit und Entglasungsfestigkeit, ist aber nachteilig für die Zeit-/Temperaturbelastbarkeit des Glaskeramikartikels und für eine umweltfreundliche Zusammensetzung unerwünscht. Der Gehalt soll bevorzugt weniger als 0,1 Gew-% und weiter bevorzugt weniger als 100 ppm betragen. Besonders bevorzugt wird kein PbO zugesetzt und sind nur die aus Verunreinigungen stammenden Gehalte von typischerweise weniger als 5 ppm vorhanden.

Färbende Verbindungen

Wegen der Verschlechterung der Helligkeit und Zunahme der Farbe enthält das Glas bis auf unvermeidliche Verunreinigungen vorzugsweise keine weiteren färbenden Verbindungen, wie von Ce, Cr, Ni, Cu, V, Mo, W und/oder S, die zu einer gelben, orangefarbenen, braunen oder roten Einfärbung führen. Die Gehalte betragen bevorzugt weniger als 20 ppm und stammen aus Verunreinigungen der eingesetzten Gemengerohstoffe. In Summe ist ein Maximal-Gehalt von 0,1 Gew.-% von ihnen noch tolerierbar.

Als besonders schädlich für die Farbe haben sich die Farboxide $Cr_2O_3$ und NiO erwiesen. Um die erfindungsgemäße Buntheit c* von höchstens 7 einzuhalten, beträgt die Summe der Gehalte $Cr_2O_3$ + NiO bevorzugt weniger als 7 ppm, weiter bevorzugt weniger als 5 ppm. Die Angabe ppm wird hier als Masseeinheit benutzt, und 1 ppm entspricht 1 mg der Farboxide bezogen auf 1 kg Glas bzw. Glaskeramik.

$Nd_20_3$

Der $Nd_2O_3$-Anteil kann 0 Gew.-% oder > 0 Gew.-% sein.

Bei den aus den erfindungsgemäßen Lithiumaluminiumsilikat-Gläsern hergestellten transparenten Glaskeramiken wird die störende auf Fe/Ti-Farbkomplexen beruhende Farbe in einer bevorzugten Ausführungsform durch Zusätze von $Nd_2O_3$ in Gehalten von 0,0001 Gew.-% bis 0,3 Gew.-% verringert. Unterhalb von 0,005 Gew.-% ist die entfärbende Wirkung relativ gering, und besonders bevorzugte Untergrenzen für $Nd_2O_3$ sind daher 0,005 Gew.-%, insbesondere 0,01 Gew.-%, ganz besonders 0,03 Gew.-%. Oberhalb von 0,3 Gew.-% wird die Helligkeit durch die Absorption der Nd-Banden im Bereich des sichtbaren Lichtes unerwünscht verschlechtert. Bevorzugt werden daher bis zu 0,2 Gew.-% zugesetzt. Ein bevorzugter Bereich für $Nd_2O_3$ ist 0,0001 Gew.-% bis 0,2 Gew.-%. Ein besonders bevorzugter Bereich für $Nd_2O_3$ ist 0,01 Gew.-% bis 0,2 Gew.-%.

CoO

Zusätze von CoO in Mengen bis zu 30 ppm, bevorzugt bis zu 20 ppm können die Entfärbung unterstützen. Bevorzugt ist ein CoO-Gehalt von 0,1 ppm bis 20 ppm CoO. Oberhalb 30 ppm erzeugt das CoO in transparenten Glaskeramiken einen rötlichen Farbstich.

In einer bevorzugten Ausführungsform besitzt der erfindungsgemäße Lithiumaluminiumsilikat-Glaskeramikartikel vorzugsweise folgende Zusammensetzung, die in Gew.-% auf Oxidbasis enthält:

$Li_2O$ 3,4 - < 4,3
$Al_2O_3$ 20 - 24
$SiO_2$ 62 - 68
$Na_2O$ 0,05 - 1
$K_2O$ 0 - 1
$Na_2O + K_2O$ 0,2 - 1,2
MgO 0,1 - 0,4
CaO 0,05 - 0,8
SrO 0-1
CaO + SrO 0,1 - 1,2
BaO 0 - 2
ZnO > 0 - 2,5
$TiO_2$ > 2 - 2,8
$ZrO_2$ 1 - < 2,2
$P_2O_5$ 0-1,5
$Fe_2O_3$ 0,03 - 0,065
$MnO_2$ 0,005 - 0,03

Um die Zielsetzung einer wirtschaftlichen Herstellung zu unterstützen, besitzt der erfindungsgemäße Lithiumaluminiumsilikat-Glaskeramikartikel eine besonders bevorzugte Zusammensetzung, die in Gew.-% auf Oxidbasis enthält:

$Li_2O$ 3,4 - < 4
$Al_2O_3$ 20 - 23
$SiO_2$ 62 - 68
$Na_2O$ 0,05 - 0,9
$K_2O$ 0,05 - 0,9
$Na_2O + K_2O$ > 0,4 - < 1
MgO 0,1 - 0,4
CaO 0,05 - < 0,6
SrO 0,02 - 1
CaO + SrO 0,1 - 0,8
BaO 0 - 2
ZnO 0,5 - 2,5
$TiO_2$ > 2 - 2,8
$ZrO_2$ 1 - < 2,2
$P_2O_5$ 0,01 - < 1
$Fe_2O_3$ 0,03 - 0,055
$MnO_2$ > 0,01 - 0,03

Läutermittel

Der Glaskeramikartikel enthält bevorzugt als Läutermittel mindestens eines aus der Gruppe Arsen- und/oder Zinnoxid, welche bei der Schmelze des kristallisierbaren Glases für den Glaskeramikartikel zugesetzt werden. Abhängig von der Wahl des Hauptläutermittels wird zwischen zwei Ausführungsformen unterschieden. Dabei wird beim Vorhandensein von mehr als einem Läutermittel dasjenige Läutermittel als Hauptläutermittel bezeichnet, welches mit dem höchsten Anteil in Gew.-% vorliegt.

In einer ersten Ausführungsform wird $AS_2O_3$ als Hauptläutermittel eingesetzt und findet sich in Gehalten von 0,2 bis 2 Gew.-% im Glaskeramikartikel. Der Mindestgehalt ist für eine ausreichende Läuterung erforderlich und ist für hohe Helligkeit und geringe Farbe vorteilhaft. Bevorzugt ist der Mindestgehalt daher 0,2 und besonders bevorzugt 0,4 Gew.-%. Höhere Gehalte als 2 Gew.-% sind für die Zeit-/Temperaturbelastbarkeit der Glaskeramik nachteilig, da sich der thermische Ausdehnungskoeffizient beim Einsatz bei höheren Temperaturen ändert. Aufgrund der Arsen-Verdampfung bei Schmelztemperaturen sind höhere Gehalte auch wegen der erforderlichen Filtermaßnahmen wirtschaftlich und unter Umweltgesichtspunkten nachteilig. Eine bevorzugte Obergrenze beträgt 1,5 und weiter bevorzugt 1,2 Gew.-%. Bei dieser Ausführungsform ist der Gehalt an $SnO_2$ bevorzugt kleiner als 0,2 Gew.-%, da der Zusatz zu einer zusätzlichen Absorption und Verschlechterung der Farbe führt.

$MgO/As_2O_3$

Bei Wahl von Arsenoxid als Hauptläutermittel kommt dem Verhältnis der Komponenten MgO / $AS_2O_3$ eine entscheidende Bedeutung zu, um geringe Farbe, hohe Helligkeit der Glaskeramik mit guter Schmelz- und Läuterbarkeit des Glases zu vereinbaren. Der erfindungsgemäße Glaskeramikartikel besitzt ein Verhältnis der Komponenten MgO / $AS_2O_3$ (beide in Gew.-%) von bevorzugt weniger als 0,7, weiter bevorzugt weniger als 0,5, und besonders bevorzugt weniger als 0,45. Wie beschrieben verstärken höhere MgO-Gehalte die Bildung der Farbkomplexe während diese Bildung durch höhere $As_2O_3$-Gehalte verringert wird. Durch eine bevorzugte Obergrenze des Quotienten der beiden ergänzen sich die Effekte in vorteilhafter Weise. Das Verhältnis der Komponenten soll bevorzugt größer als 0,05 und besonders bevorzugt größer als 0,1 sein. Dies ist darin begründet, dass bei niedrigen MgO-Gehalten trotz höherer $As_2O_3$-Gehalte die Schmelztemperatur erhöht wird.

In der zweiten Ausführungsform wird für eine umweltfreundliche Läuterung $SnO_2$ als Hauptläutermittel eingesetzt und findet sich in Gehalten von bevorzugt weniger als 0,3 Gew.-%, weiter bevorzugt weniger als 0,10 Gew.-% und besonders bevorzugt weniger als 0,08 Gew.-%. Höhere Gehalte dieser Komponente sind kritisch für die Farbe der Glaskeramik wegen der Bildung absorbierender Sn/Ti- Farbspezies bei der Kristallisation. Als Untergrenze für $SnO_2$ ist ein Mindestgehalt von 0,04 Gew.-% vorteilhaft. Insbesondere wenn die Läutermittel Arsen- oder Antimonoxid nicht eingesetzt werden, wirkt das polyvalente Zinnoxid der Blasenbildung (reboil) an Edelmetalleinbauten in der Schmelzwanne entgegen.

Bevorzugt besitzt der Glaskeramikartikel, bzw. das kristallisierbare Glas, in dieser Ausführungsform eine umweltfreundliche Zusammensetzung. Darunter wird verstanden, dass die Zusammensetzung technisch frei ist von Arsen- und Antimonoxid als übliche Läutermittel, das heißt die Gehalte beider Läutermittel liegen vorzugsweise unter 1000 ppm, weiter bevorzugt unter 500 ppm.

MgO x $SnO_2$

Bei Wahl von $SnO_2$ als Hauptläutermittel kommt dem Produkt der Komponenten MgO x $SnO_2$ eine entscheidende Bedeutung zu, um geringe Farbe, hohe Helligkeit mit guter Läuterbarkeit sowie niedrigen Schmelz- und Formgebungstemperaturen zu vereinbaren.

Das erfindungsgemäße Glas besitzt ein Produkt der Komponenten MgO x $SnO_2$ (beide in Gew.-%) von bevorzugt weniger 0,06, weiter bevorzugt weniger als 0,04 und besonders bevorzugt weniger als 0,03. Die Obergrenze für das Produkt ist darin begründet, dass die Komponente MgO die Sn/Ti-Absorptionsbande in ihrer Intensität verstärkt. Für ausreichende Läuterbarkeit und niedrige Schmelz- und Formgebungstemperaturen soll das Produkt der Komponenten mehr als 0,004, weiter bevorzugt mehr als 0,008 und besonders bevorzugt mehr als 0,01 betragen.

Die Läuterung mittels $AS_2O_3$ oder $SnO_2$ kann durch den Zusatz weiterer chemischer Läutermittel wie $Sb_2O_3$ und Ceroxid und von Läuterzusätzen wie Sulfat- oder Halogenidverbindungen unterstützt werden. Für die einzelnen Komponenten sind die aufgeführten bevorzugten Obergrenzen zu beachten. Die Summe der Läuterzusätze neben dem $AS_2O_3$ beträgt bevorzugt weniger als 1 Gew.-%.

Die Komponente $Sb_2O_3$ wirkt sich allerdings nachteilig bei der Helligkeit und Farbe aus. Die Gehalte sind daher vorzugsweise auf weniger als 0,2 Gew.-% und weiter bevorzugt auf weniger als 0,1 Gew.-% beschränkt. Besonders bevorzugt wird kein $Sb_2O_3$ zugesetzt und sind nur die aus Verunreinigungen stammenden Gehalte von weniger als 100 ppm vorhanden.

Es wird bevorzugt auf den Zusatz von Halogenidverbindungen als Läuterhilfsmittel verzichtet. Diese verdampfen bei der Schmelze und gelangen in die Schmelzwannenatmosphäre. Dabei bilden sich korrosive Verbindungen wie HF, HCl und HBr, die wegen der Korrosion der Feuerfeststeine in der Schmelzwanne und im Abgasstrang nachteilig sind. Der Glaskeramikartikel ist daher bevorzugt bis auf unvermeidliche Verunreinigungsgehalte frei von F, Cl, Br, und deren einzelne Gehalte betragen vorzugsweise weniger als 500 ppm.

Die zuvor genannten Zusammensetzungen sind so zu verstehen, dass die aufgeführten Komponenten wenigstens 98 Gew.-%, in der Regel 99 Gew.-% der Gesamtzusammensetzung betragen. Verbindungen einer Vielzahl von Elementen wie z. B. F, Cl, den Alkalien Rb, Cs, Selten Erden oder Elementen wie Hf sind bei den großtechnisch verwendeten Gemengerohstoffen übliche Verunreinigungen. Soweit für Komponenten ein Anteil von 0 Gew.-% angegeben wird, bedeutet dies, dass auf die betreffende Komponente im Rohstoffgemenge verzichtet wird. Als unvermeidliche Verunreinigungen können diese Komponenten jedoch vorhanden sein.

Der Wassergehalt der kristallisierbaren Gläser zur Herstellung der Glaskeramikartikel liegt abhängig von der Wahl der Gemengerohstoffe und den Prozessbedingungen bei der Schmelze vorzugsweise zwischen 0,015 und 0,06 mol/l. Dies entspricht $\beta$-OH-Werten von 0,16 bis 0,64 $mm^{-1}$. Bei der Umwandlung in die Glaskeramik ändert sich die IR-Bande, die zur Bestimmung des Wassergehaltes herangezogen wird. Dadurch ändert sich der $\beta$-OH-Wert für die Glaskeramik, ohne dass sich dabei der Wassergehalt ändert. Die Methode zur Bestimmung der $\beta$-OH-Werte ist z. B. in der EP 1074520 A1 beschrieben.

Die Blasenqualität des kristallisierbaren Lithiumaluminiumsilikat-Glases und des aus ihm hergestellten Glaskeramikartikel entspricht den Anforderungen an Blasenzahlen von vorzugsweise unter 5, bevorzugt unter 2 Blasen/kg. Dies gilt für Blasen größer als 0,1 mm in einer Dimension. Dies wird vorzugsweise mit den erfindungsgemäßen Zusammensetzungen und Komponentenbeziehungen in Verbindung mit technische Maßnahmen sichergestellt, wie zum Beispiel der Wannenkonstruktion, dem Energieeinsatz und dem Durchsatz der Wanne. Zur Erreichung besonders guter Blasenqualitäten bei hohen Wannendurchsätzen ist das kristallisierbare Glas optional mit einer Hochtemperaturläuterung bei Temperaturen von größer 1750 °C geläutert.

Der Glaskeramikartikel weist dieselbe Zusammensetzung auf wie das kristallisierbare Lithiumaluminiumsilikat-Glas.
Die kristallisierbaren Lithiumaluminiumsilikat-Gläser werden durch einen mehrstufigen Temperaturprozess in den Glaskeramikartikel umgewandelt.

Der erfindungsgemäße transparente, nicht eingefärbte Glaskeramikartikel enthält Hochquarz-Mischkristalle als Hauptkristallphase.

Die mit der Verwendung mineralischer Lithium-Rohstoffe verbundene erfindungsgemäße Farbe (Buntheit c*) beträgt größer 3 bis 7. Eine bevorzugte Obergrenze ist 6, weiter bevorzugt 5 und besonders bevorzugt 4,5. Um für eine wirtschaftliche Herstellung möglichst große Gehalte an mineralischen Lithium-Rohstoffen bei der Schmelze einsetzen zu können, ist die bevorzugte Buntheit c* größer als 3,2 und besonders bevorzugt größer als 3,5.

Die Helligkeit (brightness) Y des Glaskeramikartikels beträgt vorzugsweise größer als 84 %, bevorzugt größer als 85 % und besonders bevorzugt größer als 86 %. Die Werte für Farbe (Buntheit c*) und Helligkeit Y gelten für die Messung mit Normlicht D65, 2° an 4 mm dicken polierten Proben gemäß der Norm DIN 5033.

Für die Minimierung der Streuung ist es vorteilhaft, die Kristallitgrößen zu minimieren. Bevorzugt beträgt die mittlere Kristallitgröße weniger als 50 nm. Um kurze Keramisierungszeiten von weniger als 300 min zu ermöglichen, ist die mittlere Kristallitgröße bevorzugt größer als 25 nm. Der Kristallphasenanteil der Hochquarz-Mischkristalle der Glaskeramik beträgt vorzugsweise wenigstens 50 Gew.-% und vorzugsweise höchstens 80 Gew.-%.

Die Streuung bzw. Trübung (engl. haze) wird nach ASTM D1003-13 an 4 mm dicken polierten Proben der LAS-Glaskeramik gemessen. Der Haze-Wert beträgt bevorzugt weniger als 2,5 %, weiter bevorzugt weniger als 2 % und besonders bevorzugt weniger als 1,5 %. Oberhalb von 2,5 % ist die Trübung in der Regel visuell störend. Die erfindungsgemäße transparente Glaskeramik weist dadurch keine visuell störende Lichtstreuung auf. Die Durchsicht auf Gegenstände und Unterseitenbeschichtungen wird nicht verfälscht und leuchtende Anzeigen wie Displays oder Bildschirme sind unter der Glaskeramikplatte klar mit scharfen Konturen und ohne Streuung sichtbar.

Die thermische Ausdehnung der Glaskeramik wird bevorzugt in einem Temperaturbereich zwischen Raumtemperatur und 700 °C auf Werte um $0 \pm 0,5 \cdot 10^{-6}$/K eingestellt.

Die bevorzugte Geometrie für die erfindungsgemäßen Glaskeramiken bzw. die daraus hergestellten Artikel ist in Form von Platten. Die Platte weist vorzugsweise eine Dicke von 2 mm bis 20 mm auf, weil sich damit wichtige Anwendungen erschließen. Bei geringeren Dicken wird die Festigkeit beeinträchtigt, höhere Dicken sind aufgrund des höheren Materialbedarfs weniger wirtschaftlich. Bis auf die Anwendung als Sicherheitsglas, bei der es auf hohe Festigkeiten ankommt, wird die Dicke daher bevorzugt bei maximal 6 mm gewählt.

Der bevorzugte erfindungsgemäße Artikel ist eine gewalzte Glaskeramikplatte. Die maximale Flächengröße der Artikel wird bei der Herstellung durch die Bandbreite bei der Heißformgebung (Walzen bzw. Floaten) und die Größe der Keramisierungsöfen limitiert. Für bestimmte Anwendungen wie Brandschutzgläser oder Küchenarbeitstische mit integrierten Kochzonen sind Dimensionen mit Kantenlängen bis zu 3 m bevorzugt, da diese Größe die Geschosshöhe bei Fenstern und die Breite von Kochbereichen in Großküchen erfüllt.

Die Glaskeramikplatte und die vorzugsweise daraus hergestellten Artikel können dabei nicht nur eben ausgeformt sein, sondern auch dreidimensional verformt sein. Beispielsweise können abgekantete, gewinkelte oder gewölbte Platten verwendet werden. Die Platten können rechtwinklig oder in anderen Formen vorliegen sowie neben ebenen Bereichen dreidimensional verformte Bereiche wie z.B. Woks oder eingewalzte Stege oder Flächen als Erhebungen bzw. Vertiefungen enthalten. Die geometrischen Verformungen der Platten werden bei der Heißformgebung, z. B. durch strukturierte Formgebungswalzen, oder durch nachgelagerte Heißformgebung an den Ausgangsgläsern, zum Beispiel durch Brenner, Infrarotstrahler, Laserbestrahlung oder durch Schwerkraftsenken, vorgenommen. Beim Keramisieren wird mit unterstützenden keramischen Formen gearbeitet. Diese Unterlagen können dreidimensional verformt oder eben sein, um die geometrische Form einzustellen. Eine nachträgliche Politur einer oder beider Seiten ist optional möglich, wenn es die Anwendung erfordert.

Herstellungsverfahren des Glaskeramikartikels

Das erfindungsgemäße Verfahren zur Herstellung des transparenten, nicht eingefärbten Lithiumaluminiumsilikat-Glaskeramikartikels ist gekennzeichnet durch die Schritte:

a) Bereitstellen eines Gemengesatzes aus technischen Rohstoffen, beinhaltend pulverförmige Gemengeanteile mit mineralischen Lithium-Rohstoffen und optional 20 bis 80 Gew.-% Scherben;
b) Schmelzen des Gemengesatzes und Läutern bei Temperaturen größer als 1550 °C;
c) Abkühlen der Glasschmelze und Formgebung bei Temperaturen in der Nähe der Verarbeitungstemperatur $V_A$; und
d) Abkühlen in einem Entspannungsofen auf Raumtemperatur, wobei unerwünschte Spannungen im Glas entfernt werden;
e) Inspektion, Bearbeitung und Bereitstellung eines glasigen Artikels;
f) Kristallisation des glasigen Artikels in einem Keramisierungsofen zu dem erfindungsgemäßen Glaskeramikartikel mit Hochquarz-Mischkristallen als Hauptkristallphase.

Der Gemengesatz ist so ausgebildet, dass nach der Schmelze Gläser mit den erfindungsgemäßen Zusammensetzungen und Eigenschaften entstehen. Bei dem erfindungsgemäßen Verfahren werden für die Einführung des $Li_2O$ kostengünstige mineralische Rohstoffe eingesetzt und ersetzen zumindest einen Teil des üblichen Lithiumkarbonats. Bevorzugt werden Eukryptit, Spodumen und/oder Petalit einzeln oder in Kombination gewählt, da sie es gestatten, die erfindungsgemäßen Zusammensetzungen insbesondere auch bei den Komponenten $Fe_2O_3$ und $MnO_2$ bereitzustellen. Bei der Auswahl der Rohstoffe werden Lieferanten und Lagerstätten ausgewählt, die bei den typischen Verunreinigungen $Fe_2O_3$, $MnO_2$, $Na_2O$, $K_2O$ und CaO die Einhaltung der gewünschten erfindungsgemäßen Zusammensetzung gewährleisten. Die Verwendung dieser mineralischen Rohstoffe vermindert außerdem gegenüber der Verwendung von Karbonaten die Abgabe von $CO_2$ an die Atmosphäre.

Mineralische Lithium-Rohstoffe mit eher hohen Gehalten an den Alkalien $Na_2O$, $K_2O$, an MgO oder an $P_2O_5$, $B_2O_3$ sowie Fluor wie Lepidolit, Amblygonit, Hectorit und Jadarit sind eher nachteilig. Lepidolit, Amblygonit, Hectorit und Jadarit werden daher vorzugsweise nicht als Lithiumquelle eingesetzt.

Für eine kostengünstige Herstellung ist bevorzugt mindestens 1 Gew.-% des $Li_2O$-Gehaltes des Glaskeramikartikels über die mineralischen Lithium-Rohstoffe eingeführt und substituiert einen entsprechenden Zusatz von Lithiumkarbonat. Weiter bevorzugt werden mindestens 1,2 und besonders bevorzugt mindestens 1,4 Gew.-% des $Li_2O$-Gehaltes in dem Glaskeramikartikel über mineralische Lithium-Rohstoffe eingeführt. Als bevorzugte Lithium-Rohstoffe werden Eukryptit, Spodumen und/oder Petalit einzeln oder in Kombination verwendet. Aufgrund ihrer wirtschaftlichen Verfügbarkeit sind Spodumen und/oder Petalit bevorzugt.

Durch einen bevorzugten Scherbenzusatz von 20 bis 80 Gew.-% im Gemengesatz wird das Einschmelzen begünstigt, und es lassen sich höhere Wannendurchsätze erhalten. Die Scherben stammen aus der Produktion i.a. desselben Glases und sind bei Qualitätskontrollen oder beim Zuschneiden anfallende Ausschussmengen des Glases oder der Glaskeramik, die mit mineralischen Lithium-Rohstoffen erschmolzen wurden und in die Produktion zurückgeführt werden.

Es wird bei einer maximalen Temperatur von größer als 1550 °C, bevorzugt größer als 1600 °C geschmolzen und geläutert. Optional wird ein Hochtemperatur-Läuteraggregat eingesetzt, und die maximale Temperatur der Glasschmelze in der Schmelzwanne beträgt mehr als 1750°C, bevorzugt mehr als 1850°C. Der Einsatz elektrischer Energie über eine zusätzliche Hochtemperaturläuterung ermöglicht es, umweltfreundlich hergestellte elektrische Energie einzusetzen. Damit können Forderungen an einen Schmelzprozess mit $CO_2$-Verminderung besser erfüllt werden.

Bei der Formgebung des glasigen Artikels kommen bewährte Verfahren der Glastechnologie wie Gießen, Pressen, Blasen, Walzen, Floaten zum Einsatz. Bevorzugt wird ein Glasband mit plattenförmiger Geometrie über Floaten oder Walzen hergestellt und zur Vermeidung von Spannungen in einem Kühlofen auf Raumtemperatur abgekühlt. Aus diesem Glasband werden nach Sicherstellung der Qualität hinsichtlich von Volumen- und Oberflächendefekten Platten der gewünschten Größe hergestellt. Bevorzugtes Formgebungsverfahren aus der Glasschmelze ist ein Verfahren über zwei Walzen, da dieses Verfahren wegen der schnelleren Abkühlung Vorteile hat, wenn die Zusammensetzungen zu Entglasungen neigen.

Der nächste Prozessschritt ist die Keramisierung des glasigen Artikels auf ebenen oder dreidimensional geformten, hochtemperaturstabilen Unterlagen (Brennhilfsmitteln). Bevorzugt wird die Keramisierung in einem Rollenofen durchgeführt, der die gewünschten hohen Heizraten großtechnisch sicherstellt. Zur Erzeugung des gewünschten mikrokristallinen Gefüges wird die Keramisierung in bekannter Weise in einem zweistufigen Prozess beinhaltend Keimbildung und Kristallisation durchgeführt.

Bevorzugt beträgt die Keramisierungszeit weniger als 300 Minuten, bevorzugt weniger als 200 Minuten und besonders bevorzugt weniger als 150 Minuten.

Verwendung des Glaskeramikartikels

Vorzugsweise findet der transparente Lithiumaluminiumsilikat-Glaskeramikartikel Verwendung als Brandschutzglas, Kaminsichtscheibe, Backofensichtscheibe, die insbesondere für Pyrolyseherde verwendet wird, Kochfläche, die eine Unterseitenbeschichtung aufweisen kann, Abdeckung im Beleuchtungssektor, Sicherheitsglas, das vorzugsweise im Laminatverbund verwendet wird, Trägerplatte oder Ofenauskleidung, die vorzugsweise in thermischen Prozessen zum Einsatz kommt.

Bei Kaminsichtscheiben wird eine gute Durchsicht auf den Brennraum und die Flammen gewünscht. Bei Kochflächen mit farbiger Unterseitenbeschichtung soll die Farbe der Unterseitenbeschichtung nicht durch die Farbe der Glaskeramik verfälscht werden. Für die genannten Verwendungen sind die erfindungsgemäßen hohe Werte der Helligkeit (brightness) Y und die geringe Buntheit c* in Verbindung mit der geringen unauffälligen Lichtstreuung bevorzugt.

Durch Aufbringen einer blickdichten Beschichtung auf Ober- und/oder Unterseite lässt sich eine farbige Kochfläche mit der geforderten visuellen Abdeckung herstellen und der Einblick in die technischen Einbauten unter der Kochfläche verhindern. Die Beheizung der Kochfläche erfolgt wie üblich mit Gasbrennern, Strahlungsheizungen oder induktiv.

Aussparungen in der Beschichtung erlauben das Anbringen von Sensorbereichen, farbigen und weißen Anzeigenvorrichtungen sowie Displays. Die Anzeigenvorrichtungen bestehen aus Licht emittierenden elektronischen Bauteilen, wie z. B. aus Leuchtdioden, OLEDs, LCDs oder Fluoreszenzanzeigen.

Weitere bevorzugte Verwendungen für den Glaskeramikartikel sind die als Trägerplatte oder Ofenauskleidung. In der Keramik-, Solar- oder Pharmaindustrie oder der Medizintechnik eignet er sich insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung. Weiter findet er Verwendung für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten oder als Abdeckung für Heizelemente, insbesondere als Koch-, Grill- oder Bratfläche, als weiße Ware, als Heizkörperabdeckung, als Wafersubstrat, als Gegenstand mit UV-Schutz, als Fassadenplatte oder als Material für Gehäusekomponenten beispielsweise von elektronischen Geräten und/oder Abdeckgläser für IT wie Mobiltelefone, Laptops, Scannergläser oder als Komponente für ballistischen Schutz.

Die vorliegende Erfindung wird anhand der folgenden Beispiele verdeutlicht.

Die kristallisierbaren Gläser für die Herstellung der Glaskeramikartikel wurden aus in der Glasindustrie üblichen Gemengerohstoffen bei Temperaturen von 1620 °C, 4 Stunden eingeschmolzen.

Als Gemengerohstoffe wurden wahlweise ausgewählt: Lithiumkarbonat, Spodumen, Eukryptit, Petalit, Aluminiumoxid, Aluminiumhydroxid, Aluminiummetaphosphat, Quarzsand, Natron- und Kalisalpeter, Natrium- und Kaliumcarbonat, Magnesiumoxid, Kalk, Dolomit, Strontiumcarbonat, Bariumcarbonat, Zinkoxid, Arsenoxid oder eine andere arsenhaltige Verbindung, Titanoxid, Zirkonsilikat, Zirkonoxid, Neodymoxid, optional Zinnoxid.

Nach dem Einschmelzen des Gemenges in Tiegeln aus gesintertem Kieselglas wurden die Laborschmelzen in Pt/Rh-Tiegel mit Innentiegel aus Kieselglas umgegossen und bei Temperaturen von 1600 °C, 60 Minuten durch Rühren homogenisiert. Nach dieser Homogenisierung wurden die Gläser für 3 Stunden bei 1640 °C geläutert.

Anschließend wurden Stücke von ca. 120 x 140 x 30 $mm^3$ Größe gegossen und in einem Kühlofen beginnend ab 660 °C auf Raumtemperatur abgekühlt, um Spannungen abzubauen. Die Gussstücke wurden in die für die Untersuchungen und für die Keramisierung benötigten Größen unterteilt.

Tabelle 1 zeigt Zusammensetzungen und Komponentenbeziehungen von kristallisierbaren Gläsern und von den daraus hergestellten erfindungsgemäßen Glaskeramikartikeln und Vergleichsglaskeramikartikeln. Die über die Rohstoffe Spodumen (S) und Petalit (P) eingeführte Menge an $Li_2O$ ist ebenfalls dargestellt. Die beim Gesamtgehalt fehlende Menge (C = $Li_2O$ ("gesamt") - S - P) wird über Lithiumkarbonat bereitgestellt und ist in der Tabelle nicht angegeben.

Dabei handelt es sich bei den Zusammensetzungen 1 bis 8 um solche im Rahmen der Erfindung und bei den Zusammensetzungen 9 bis 12 um Vergleichsgläser. Aufgrund von typischen Verunreinigungen in den verwendeten großtechnischen Gemengerohstoffen addieren sich die Zusammensetzungen nicht genau zu 100 Gew.-%. Typische Verunreinigungen, auch wenn nicht absichtlich in die Zusammensetzung eingeführt, sind F, Cl, B, Rb, Cs, Hf, die üblicherweise weniger als 0,2 Gew.-% betragen. Sie werden oft über die Rohstoffe für die verwandten Komponenten eingeschleppt, so z.B. Rb und Cs über die Na-, bzw. K- Rohstoffe oder Hf über den Zr-Rohstoff.
Die Gehalte der für die Buntheit c* nachteiligen Komponenten CoO, $Cr_2O_3$ und NiO wurden für einige Glaszusammensetzungen analysiert, wobei die Nachweisgrenze der verwendeten Methode Laser Ablation-Induktiv gekoppelte Plasma Massenspektrometrie (LA-ICP-MS) mindestens 1 ppm beträgt.

Die Tabelle 2 zeigt die Eigenschaften der mit den aufgeführten Keramisierungsprogrammen hergestellten transparenten Glaskeramikartikel mit Hochquarz-Mischkristallen als Hauptkristallphase. Dabei handelt es sich bei den Beispielen 1 bis 14 um Ausführungsbeispiele und bei den Beispielen 15 bis 18 um Vergleichsbeispiele.

In Tabelle 2 sind die optischen Eigenschaften der Glaskeramikartikel, nämlich spektrale Transmission [%] bei 400 nm, Infrarottransmission [%] bei 1600 nm sowie Helligkeit Y aus dem CIE-Farbsystem und die Helligkeit L* sowie die Farbkoordinaten a*, b* aus dem CIELAB-System mit der Größe c* als Maß für die Farbe (Buntheit) sowie der Haze-Wert als Maß für die Streuung angegeben. Für ausgewählte Glaskeramikartikel wurde auch die thermische Ausdehnung zwischen 20 °C und 700°C [$10^{-6}$/K] bestimmt.

Die Vergleichsbeispiele 15 bis 17 sind weder mit Spodumen noch mit Petalit, sondern nur mit Lithiumkarbonat als Lithiumquelle hergestellt und erreichen dadurch niedrige Gehalte an $Fe_2O_3$ und $MnO_2$. Trotzdem sind die Werte für Helligkeit Y und Farbe (Buntheit c*) nur wenig besser als bei den erfindungsgemäßen Glaskeramikartikelbeispielen. Hinsichtlich der Schmelzbarkeit und den Rohstoffkosten sind diese nicht erfindungsgemäßen Zusammensetzungen also nachteilhaft.
Das Vergleichsbeispiel 18 ist aus der Glaszusammensetzung 12 mit Petalit als Lithium-Rohstoff hergestellt und besitzt Gehalte an $Fe_2O_3$ und $MnO_2$ im Bereich der Erfindung, hat aber aufgrund ungünstiger Bereiche bei der Zusammensetzung und den Komponentenbeziehungen Nachteile bei Helligkeit, Farbe und den spektralen Transmissionswerten für 400 und 1600 nm.

Die Keramisierung erfolgte in einem Laborofen, der hohe Heizraten erlaubt. Für die Herstellung der Glaskeramikartikel wurden zwei unterschiedlich schnelle Keramisierungsprogramme verwendet. Das langsamere Programm 1 erreicht für das gleiche kristallisierbare Glas in der Regel eine etwas geringere Streuung, aber etwas schlechtere Werte für die Farbe.

Keramisierungsprogramm 1, (Keramisierungszeit 156 min):

a) schnelles Aufheizen von Raumtemperatur auf 720 °C in 24 min,
b) Temperaturerhöhung von 720 °C bis 800 °C in 40 min (Heizrate 2 °C/min),
c) Temperaturerhöhung von 800 °C bis 890 °C in 53 min (Heizrate 1,7 °C/min),
d) Haltezeit von 10 min bei einer Maximaltemperatur von 890°C,
e) Abkühlen innerhalb von 29 min von 890 °C auf 600 °C (mit 10 °C/min), dann schnelle Abkühlung auf Raumtemperatur.

Keramisierungsprogramm 2, (Keramisierungszeit 89 min):

a) schnelles Aufheizen von Raumtemperatur auf 715 °C in 24 min,
b) Temperaturerhöhung von 715 °C bis 800 °C in 19 min (Heizrate 4,5 °C/min),
c) Temperaturerhöhung von 800 auf 885 °C innerhalb von 27 min, dabei Aufheizen von 800 auf 819 °C in 18 min (Heizrate 1,1 °C/min), weiteres Aufheizen mit 8°C/min auf 885°C in 9 min (Heizrate 7,3 °C/min);
d) Weitere Temperaturerhöhung von 885°C auf 895 °C in 6 min (Heizrate 1,7 °C/min), Haltezeit von 4 min bei Maximaltemperatur 895°C,
e) Abkühlen innerhalb von 9 min auf 800 °C (mit 10,6 °C/min, dann schnelle Abkühlung auf Raumtemperatur.

Die Transmissionsmessungen wurden an polierten Platten der Dicke 4 mm mit Normlicht D65, 2° mit dem Gerät Perkin-Elmer Lambda 900 durchgeführt. Aus den gemessenen spektralen Werten im Bereich zwischen 380 nm und 780 nm, der das sichtbare Lichtspektrum repräsentiert, wird die Helligkeit Y nach DIN 5033 für die gewählte Normlichtart D65 und Beobachterwinkel 2° berechnet. Aus diesen Messungen werden ebenfalls die Helligkeit L* und die Farbkoordinaten a*, b* aus dem CIELAB-System und die Buntheit c* berechnet.

Die Streuung der Glaskeramiken wird durch Messung der Trübung (engl. haze) bestimmt. Dabei wird die Trübung mit Normlicht C an beidseitig polierten 4 mm dicken Platten mit einem kommerziellen Messgerät "haze-guard plus" der Firma BYK-Gardner gemäß der Norm ASTM D1003-13 gemessen und durch den Haze-Wert charakterisiert.

Tabelle 1: Glaszusammensetzungen für erfindungsgemäße Glaskeramikartikel

| **Glas Nr.** | | | | | | | |
|---|---|---|---|---|---|---|---|
| **Zusammensetzung** | Gew.-% | **1** | **2** | **3** | **4** | **5** | **6** |
| $Li_2O$ („gesamt") | | 4,09 | 3,57 | 3,64 | 3,70 | 3,72 | 3,65 |
| $Na_2O$ | | 0,52 | 0,47 | 0,52 | 0,15 | 0,52 | 0,18 |
| $K_2O$ | | 0,20 | 0,39 | 0,20 | 0,33 | 0,20 | 0,33 |
| MgO | | 0,27 | 0,13 | 0,27 | 0,33 | 0,27 | 0,30 |
| CaO | | 0,34 | 0,17 | 0,34 | 0,31 | 0,34 | 0,29 |
| SrO | | 0,05 | 0,11 | 0,05 | 0,05 | 0,05 | 0,05 |
| BaO | | 0,92 | 1,46 | 0,93 | 0,98 | 0,90 | 0,99 |
| ZnO | | 1,82 | 1,70 | 1,79 | 1,80 | 1,80 | 1,80 |
| $Al_2O_3$ | | 21,29 | 21,83 | 21,31 | 21,27 | 21,30 | 21,38 |
| $SiO_2$ | | 65,2 | 65,0 | 65,7 | 65,9 | 65,7 | 65,9 |
| $TiO_2$ | | 2,38 | 2,46 | 2,38 | 2,40 | 2,39 | 2,41 |
| $ZrO_2$ | | 1,81 | 1,77 | 1,82 | 1,83 | 1,82 | 1,83 |
| $P_2O_5$ | | 0,042 | 0,047 | 0,037 | 0,039 | 0,040 | 0,042 |
| $Fe_2O_3$ | | 0,032 | 0,040 | 0,027 | 0,031 | 0,033 | 0,038 |
| $MnO_2$ | | 0,0110 | 0,0140 | 0,0079 | 0,0093 | 0,0100 | 0,0120 |
| $As_2O_3$ | | 0,89 | 0,78 | 0,87 | 0,76 | 0,86 | 0,72 |
| $SnO_2$ | | - | - | - | - | - | - |
| $Nd_2O_3$ | | 0,046 | - | 0,051 | 0,048 | 0,048 | 0,057 |
| CoO | | <1ppm | <1ppm | <1ppm | <1ppm | <1ppm | <1ppm |
| $Cr_2O_3$ | | <1ppm | <1ppm | <1ppm | 1,1ppm | <1ppm | <1ppm |
| NiO | | <1ppm | <1ppm | <1ppm | <1ppm | <1ppm | <1ppm |
| **Komponentenbeziehungen** | | | | | | | |
| MgO / $As_2O_3$ | | 0,303 | 0,167 | 0,310 | 0,434 | 0,314 | 0,417 |
| MgO x $SnO_2$ | | 0 | 0 | 0 | 0 | 0 | 0 |
| $Na_2O$ + $K_2O$ | | 0,72 | 0,86 | 0,72 | 0,48 | 0,72 | 0,51 |
| CaO + SrO | | 0,39 | 0,28 | 0,39 | 0,36 | 0,39 | 0,34 |
| $TiO_2$ + $ZrO_2$ + $SnO_2$ | | 4,19 | 4,23 | 4,20 | 4,23 | 4,21 | 4,24 |
| **Mineralische Gemengerohstoffe für $Li_2O$** | | | | | | | |
| P: $Li_2O$ aus Petalit stammend | Gew.-% | 0 | 0 | 0 | 0 | 0 | 0,80 |
| S: $Li_2O$ aus Spodumen stammend | Gew.-% | 1,34 | 1,88 | 1,00 | 1,25 | 1,38 | 1,25 |
| | | | | | | | |

Tabelle 1 (Fortsetzung): Glaszusammensetzungen für erfindungsgemäße Glaskeramikartikel und Vergleichszusammensetzungen 9, 10, 11 und 12

| **Glas Nr.** | | | | | | | |
|---|---|---|---|---|---|---|---|
| **Zusammensetzung** | Gew.-% | 7 | 8 | 9 | 10 | 11 | 12 |
| $Li_2O$ („gesamt") | | 3,73 | 3,70 | 3,65 | 3,71 | 3,66 | 4,18 |
| $Na_2O$ | | 0,14 | 0,14 | 0,17 | 0,37 | 0,56 | 0,29 |
| $K_2O$ | | 0,33 | 0,33 | 0,20 | 0,29 | 0,10 | 0,28 |
| MgO | | 0,32 | 0,32 | 1,02 | 0,71 | 0,61 | 0,80 |
| CaO | | 0,30 | 0,30 | 0,02 | 0,02 | 0,24 | 0,02 |
| SrO | | 0,05 | 0,05 | 0,01 | 0,010 | 0,49 | - |
| BaO | | 0,99 | 0,98 | 0,84 | 1,17 | 0,52 | 1,16 |
| ZnO | | 1,88 | 1,84 | 1,61 | - | 1,76 | - |
| $Al_2O_3$ | | 21,44 | 21,31 | 20,00 | 21,80 | 21,58 | 21,70 |
| $SiO_2$ | | 66,3 | 65,8 | 67,30 | 65,34 | 66,19 | 65,50 |
| $TiO_2$ | | 2,42 | 2,42 | 2,38 | 2,11 | 2,21 | 2,11 |
| $ZrO_2$ | | 1,83 | 1,82 | 1,84 | 2,24 | 1,83 | 2,03 |
| $P_2O_5$ | | 0,046 | 0,051 | 0,030 | 1,470 | 0,02 | 1,43 |
| $Fe_2O_3$ | | 0,033 | 0,045 | 0,017 | 0,0145 | 0,015 | 0,050 |
| $MnO_2$ | | 0,0100 | 0,0160 | < 0,001 | 0,0012 | < 0,001 | 0,0050 |
| $As_2O_3$ | | - | 0,77 | 0,81 | 0,75 | - | 0,44 |
| $SnO_2$ | | 0,081 | - | - | - | 0,12 | - |
| $Nd_2O_3$ | | 0,052 | 0,049 | 0,059 | - | 0,054 | - |
| CoO | | <1ppm | <1ppm | <1ppm | <1ppm | <1ppm | - |
| $Cr_2O_3$ | | <1ppm | <1ppm | <1ppm | <1ppm | <1ppm | - |
| NiO | | <1ppm | <1ppm | <1ppm | <1ppm | <1ppm | - |
| **Komponentenbeziehungen** | | | | | | | |
| MgO / $As_2O_3$ | | 0 | 0,416 | 1,259 | 0,947 | 0 | 1,818 |
| MgO x $SnO_2$ | | 0,026 | 0 | 0 | 0 | 0,073 | 0 |
| $Na_2O$ + $K_2O$ | | 0,47 | 0,47 | 0,37 | 0,66 | 0,66 | 0,57 |
| CaO + SrO | | 0,35 | 0,35 | 0,03 | 0,03 | 0,73 | 0,02 |
| $TiO_2$ + $ZrO_2$ + $SnO_2$ | | 4,33 | 4,24 | 4,22 | 4,35 | 4,16 | 4,14 |
| **Mineralische Gemengerohstoffe für $Li_2O$** | | | | | | | |
| P: $Li_2O$ aus Petalit stammend | Gew.-% | 0 | 0 | 0 | 0 | 0 | 1,1 |
| S: $Li_2O$ aus Spodumen stammend | Gew.-% | 1,38 | 2,13 | 0 | 0 | 0 | 0 |
| | | | | | | | |

Tabelle 2: Keramisierungsbedingungen und Eigenschaften der erfindungsgemäßen Glaskeramikartikel

| **Beispiel Nr.** | | **1** | **2** | **3** | **4** | **5** | **6** |
|---|---|---|---|---|---|---|---|
| **Zusammensetzung Nr.** | | **1** | **1** | **2** | **2** | **3** | **4** |
| **Keramisierungsprogramm** | | 1 | 2 | 1 | 2 | 1 | 1 |
| **Eigenschaften keramisiert** | | | | | | | |
| **Transmission Normlicht D65, 2° 4 mm Dicke** | | | | | | | |
| 400 nm | % | 61,2 | 63,0 | 71,9 | 71,9 | 73,8 | 73,4 |
| 1600 nm | % | 87,1 | 87,1 | 85,7 | 85,7 | 87,7 | 86,8 |
| Lichttransmission Y | % | 85,6 | 85,9 | 88,3 | 88,2 | 87,8 | 87,7 |
| L* | | 94,1 | 94,3 | 95,3 | 95,2 | 95,1 | 95,1 |
| a* | | -0,5 | -0,5 | -0,4 | -0,4 | -0,4 | -0,4 |
| b* | | 5,6 | 5,2 | 4,2 | 4,2 | 3,0 | 3,2 |
| c* | | 5,6 | 5,2 | 4,2 | 4,2 | 3,1 | 3,2 |
| **Streuung Normlicht C, 4 mm Dicke** | | | | | | | |
| Haze | % | 0,54 | 0,66 | 0,55 | 0,43 | 0,57 | 0,62 |
| **therm Ausdehnung $\alpha_{20/700}$** | $10^{-6}$/K | | | | | | |

Tabelle 2 (Fortsetzung): Keramisierungsbedingungen und Eigenschaften der erfindungsgemäßen Glaskeramikartikel

| **Beispiel Nr.** | | **7** | **8** | **9** | **10** | **11** | **12** |
|---|---|---|---|---|---|---|---|
| **Zusammensetzung Nr.** | | **5** | **5** | **6** | **6** | **7** | **7** |
| **Keramisierungsprogramm** | | 1 | 2 | 1 | 2 | 1 | 2 |
| **Eigenschaften keramisiert** | | | | | | | |
| **Transmission Normlicht D65, 2° 4 mm Dicke** | | | | | | | |
| 400 nm | % | 72,0 | 73,3 | 71,2 | 72,5 | 71,9 | 73,8 |
| 1600 nm | % | 86,7 | 86,5 | 86,0 | 85,9 | 85,9 | 86,2 |
| Lichttransmission Y | % | 87,5 | 87,8 | 87,3 | 87,5 | 85,7 | 85,8 |
| L* | | 95,0 | 95,1 | 94,9 | 95,0 | 94,2 | 94,2 |
| a* | | -0,4 | -0,4 | -0,5 | -0,4 | -0,2 | -0,1 |
| b* | | 3,4 | 3,2 | 3,6 | 3,2 | 3,8 | 3,3 |
| c* | | 3,4 | 3,2 | 3,6 | 3,2 | 3,8 | 3,4 |
| **Streuung Normlicht C, 4 mm Dicke** | | | | | | | |
| Haze | % | 0,55 | 1,74 | 0,31 | 0,54 | 0,49 | 1,10 |
| **therm Ausdehnung $\alpha_{20/700}$** | $10^{-6}$/K | | | | -0,37 | | -0,39 |

Tabelle 2 (Fortsetzung): Keramisierungsbedingungen und Eigenschaften der erfindungsgemäßen Glaskeramikartikel und Vergleichsglaskeramikartikel 15, 16, 17 und 18

| **Beispiel Nr.** | | **13** | **14** | **15** | **16** | **17** | **18** |
|---|---|---|---|---|---|---|---|
| **Zusammensetzung Nr.** | | **8** | **8** | **9** | **10** | **11** | **12** |
| **Keramisierungsprogramm** | | 1 | 2 | 2 | 2 | 2 | 1 |
| **Eigenschaften keramisiert** | | | | | | | |
| **Transmission Normlicht D65, 2° 4 mm Dicke** | | | | | | | |
| 400 nm | % | 69,0 | 70,4 | 70,9 | 77,4 | 67,0 | 58,7 |
| 1600 nm | % | 84,3 | 84,7 | 89,2 | 88,7 | 89,0 | 80,9 |
| Lichttransmission Y | % | 86,8 | 87,2 | 87,1 | 89,5 | 83,8 | 84,8 |
| L* | | 94,7 | 94,8 | 94,8 | 95,8 | 93,4 | 93,6 |
| a* | | -0,4 | -0,5 | -0,5 | -0,5 | -0,2 | -1,0 |
| b* | | 4,2 | 3,7 | 3,2 | 3,4 | 3,7 | 7,8 |
| c* | | 4,2 | 3,7 | 3,3 | 3,4 | 3,7 | 7,9 |
| **Streuung Normlicht C, 4 mm Dicke** | | | | | | | |
| Haze | % | 0,42 | 0,83 | 0,85 | 0,54 | 0,62 | |
| **therm Ausdehnung $\alpha_{20/700}$** | $10^{-6}$/K | | -0,40 | -0,01 | | -0,11 | |

**Patentansprüche**

**1.** Transparenter, nicht eingefärbter Lithiumaluminiumsilikat-Glaskeramikartikel mit Hochquarz-Mischkristallen als Hauptkristallphase, **dadurch gekennzeichnet, dass** er im Wesentlichen folgenden Komponenten (in Gew.-% auf Oxidbasis) enthält:

$Li_2O$ 3 - < 4,5
$Al_2O_3$ 19 - 24
$SiO_2$ 62 - 70
$Na_2O$ 0-1,5
$K_2O$ 0 - 1,5
MgO 0,01 - < 0,5
CaO 0-1,5
SrO 0-1,5
BaO 0 - 3
ZnO 0 - 3
$TiO_2$ > 1,6 - 2,8
$ZrO_2$ 1 - < 2,5

$P_2O_5$ 0 - < 4
$Fe_2O_3$ 0,025 - 0,065
$MnO_2$ 0,002 - 0,05

und mit mindestens einem Läutermittel, ausgewählt aus der Gruppe $As_2O_3$ und/oder $SnO_2$, in Gehalten bis zu 2 Gew.-%,
wobei der Glaskeramikartikel, gemessen bei 4 mm Dicke mit Normlicht D65, 2°, über eine Buntheit c* von größer 3 bis 7 verfügt.

**2.** Lithiumaluminiumsilikat-Glaskeramikartikel nach Anspruch 1, **dadurch gekennzeichnet, dass** die Bedingung 0,2 Gew.-% $\leq Na_2O + K_2O \leq$ 1,5 Gew.-% gilt.

**3.** Lithiumaluminiumsilikat-Glaskeramikartikel nach mindestens einem der Ansprüche 1 bis 2, **dadurch gekennzeichnet, dass** er MgO mit einem Anteil von 0,05 Gew.-% bis 0,4 Gew.-% enthält.

**4.** Lithiumaluminiumsilikat-Glaskeramikartikel nach mindestens einem der vorherigen Ansprüche, **dadurch gekennzeichnet, dass** die Bedingung 0,1 Gew.-% $\leq$ CaO + SrO $\leq$ 1 Gew.-% gilt.

**5.** Lithiumaluminiumsilikat-Glaskeramikartikel nach mindestens einem der vorherigen Ansprüche, **dadurch gekennzeichnet, dass** er $P_2O_5$ mit einem Anteil von 0,01 bis weniger als 1,3 Gew.-% enthält.

**6.** Lithiumaluminiumsilikat-Glaskeramikartikel nach mindestens einem der vorherigen Ansprüche, **dadurch gekennzeichnet, dass** er $Fe_2O_3$ mit einem Anteil von 0,03 bis 0,055 Gew.-% enthält.

**7.** Lithiumaluminiumsilikat-Glaskeramikartikel nach mindestens einem der vorherigen Ansprüche, **dadurch gekennzeichnet, dass** er $MnO_2$ mit einem Anteil von mehr als 0,01 Gew.-% enthält.

**8.** Lithiumaluminiumsilikat-Glaskeramikartikel nach mindestens einem der vorherigen Ansprüche, **dadurch gekennzeichnet, dass** er $Cr_2O_3$ und/oder NiO enthält, wobei die Summe der Gehalte $Cr_2O_3$ + NiO weniger als 7 ppm beträgt.

**9.** Lithiumaluminiumsilikat-Glaskeramikartikel nach mindestens einem der vorhergehenden Ansprüche, **dadurch gekennzeichnet,**
**dass** er $Nd_2O_3$ enthält, wobei sein Anteil 0,0001 Gew.-% bis 0,2 Gew.-%, bevorzugt 0,01 Gew.-% bis 0,2 Gew.-% beträgt.

**10.** Lithiumaluminiumsilikat-Glaskeramikartikel nach Anspruch 1,
**dadurch gekennzeichnet, dass** er folgende Komponenten (in Gew.-% auf Oxidbasis) enthält:

$Li_2O$ 3,4 - < 4,3
$Al_2O_3$ 20 - 24
$SiO_2$ 62 - 68
$Na_2O$ 0,05 - 1
$K_2O$ 0 - 1
$Na_2O + K_2O$ 0,2 - 1,2
MgO 0,1 - 0,4
CaO 0,05 - 0,8
SrO 0-1
CaO + SrO 0,1 - 1,2
BaO 0 - 2
ZnO > 0 - 2,5
$TiO_2$ > 2 - 2,8
$ZrO_2$ 1 - < 2,2
$P_2O_5$ 0-1,5
$Fe_2O_3$ 0,03 - 0,065
$MnO_2$ 0,005 - 0,03

**11.** Lithiumaluminiumsilikat-Glaskeramikartikel nach Anspruch 1, **dadurch gekennzeichnet, dass** er folgende Komponenten (in Gew.-% auf Oxidbasis) enthält:

$Li_2O$ 3,4 - < 4
$Al_2O_3$ 20 - 23
$SiO_2$ 62 - 68
$Na_2O$ 0,05 - 0,9
$K_2O$ 0,05 - 0,9
$Na_2O + K_2O$ > 0,4 - < 1
MgO 0,1 - 0,4
CaO 0,05 - < 0,6
SrO 0,02 - 1
CaO + SrO 0,1 - 0,8
BaO 0 - 2
ZnO 0,5 - 2,5
$TiO_2$ > 2 - 2,8
$ZrO_2$ 1 - < 2,2
$P_2O_5$ 0,01 - < 1
$Fe_2O_3$ 0,03 - 0,055
$MnO_2$ > 0,01 - 0,03

**12.** Lithiumaluminiumsilikat-Glaskeramikartikel nach mindestens einem der vorhergehenden Ansprüche, **dadurch gekennzeichnet, dass** er $As_2O_3$ als Hauptläutermittel mit Gehalten von 0,2 bis 2 Gew.-% enthält.

**13.** Lithiumaluminiumsilikat-Glaskeramikartikel nach Anspruch 12, **dadurch gekennzeichnet, dass** für das Verhältnis der Komponenten MgO und $As_2O_3$ gilt:
$MgO/As_2O_3 < 0,7$

**14.** Lithiumaluminiumsilikat-Glaskeramikartikel nach mindestens einem der vorhergehenden Ansprüche 1 bis 11, **dadurch gekennzeichnet, dass** er $SnO_2$ als Hauptläutermittel mit Gehalten von 0,04 bis 0,3 Gew.-% enthält.

**15.** Lithiumaluminiumsilikat-Glaskeramikartikel nach Anspruch 14, **dadurch gekennzeichnet, dass** für das Produkt der Komponenten MgO und $SnO_2$ gilt: $0,004 < MgO \times SnO_2 < 0,6$

**16.** Lithiumaluminiumsilikat-Glaskeramikartikel nach mindestens einem der vorhergehenden Ansprüche, **dadurch gekennzeichnet, dass** er für 4 mm Dicke eine Helligkeit Y von größer als 84 % und/oder einen Haze-Wert < 2,5 % besitzt.

**17.** Lithiumaluminiumsilikat-Glaskeramikartikel nach mindestens einem der vorhergehenden Ansprüche, **dadurch gekennzeichnet, dass** er in Form einer Platte mit einer Dicke von 2 mm bis 20 mm vorliegt.

**18.** Verfahren zur Herstellung eines transparenten, nicht eingefärbten Lithiumaluminiumsilikat-Glaskeramikartikels nach mindestens einem der Ansprüche 1 bis 17, **gekennzeichnet durch** die Schritte:

a) Bereitstellen eines Gemengesatzes aus technischen Rohstoffen, beinhaltend pulverförmige Gemengeanteile mit mineralischen Lithium-Rohstoffen und 20 bis 80 Gew.-% Scherben;
b) Schmelzen des Gemengesatzes und Läutern bei Temperaturen größer als 1550 °C;
c) Abkühlen der Glasschmelze und Formgebung bei Temperaturen in der Nähe der Verarbeitungstemperatur $V_A$; und
d) Abkühlen in einem Entspannungsofen auf Raumtemperatur
e) Inspektion, Bearbeitung und Bereitstellung eines glasigen Artikels
f) Kristallisation des glasigen Artikels in einem Keramisierungsofen zu einem Glaskeramikartikel mit Hochquarz-Mischkristallen als Hauptkristallphase.

**19.** Verfahren zur Herstellung eines Lithiumaluminiumsilikat-Glaskeramikartikels nach Anspruch 18, **gekennzeichnet dadurch, dass** Spodumen und/oder Petalit als mineralische Lithium-Rohstoffe eingesetzt werden und mindestens 1 Gew.-% des $Li_2O$-Gehaltes des Glaskeramikartikels einbringen.

**20.** Verwendung einer Glaskeramikplatte nach Anspruch 17 als Brandschutzglas, Kaminsichtscheibe, Backofensichtscheibe, Kochfläche, Abdeckung im Beleuchtungssektor, Sicherheitsglas, Trägerplatte oder Ofenauskleidung.

Europäisches
Patentamt
European
Patent Office
Office européen
des brevets

# EUROPÄISCHER RECHERCHENBERICHT

Nummer der Anmeldung
EP 21 17 2041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2014 222645 A1 (SCHOTT AG [DE]) 12. Mai 2016 (2016-05-12) * Absätze [0006], [0007], [0014], [0034], [0039], [0050], [0052], [0055], [0067], [0074] * | 1,18,20 | INV. C03C10/00 C03C3/085 C03C1/00 C03C3/087 C03C3/097 C03C4/10 F24C15/10 |
| X | EP 3 339 741 A1 (SCHOTT AG [DE]) 27. Juni 2018 (2018-06-27) * Anspruch 1; Beispiele 7,11,14 * | 1-20 | |
| X | EP 3 502 072 A1 (SCHOTT AG [DE]) 26. Juni 2019 (2019-06-26) * Beispiel 43 * | 1-20 | |
| X | DE 20 2018 102534 U1 (SCHOTT AG [DE]) 15. Mai 2018 (2018-05-15) * Beispiele 36,31 * | 1-20 | |
| X | DE 20 2019 102795 U1 (SCHOTT AG [DE]) 27. Mai 2019 (2019-05-27) * Beispiele B7, B5; Tabelle 1 * | 1-20 | |

RECHERCHIERTE SACHGEBIETE (IPC)
C03C
F24C

Der vorliegende Recherchenbericht wurde für alle Patentansprüche erstellt

3

| Recherchenort | Abschlußdatum der Recherche | Prüfer |
|---|---|---|
| München | 15. Oktober 2021 | Pollio, Marco |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 21 17 2041

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2021

| Im Recherchenbericht angeführtes Patentdokument | Datum der Veröffentlichung | Mitglied(er) der Patentfamilie | Datum der Veröffentlichung |
|---|---|---|---|
| DE 102014222645 A1 | 12-05-2016 | DE 102014222645 A1 | 12-05-2016 |
| | | EP 3018107 A1 | 11-05-2016 |
| | | JP 6587903 B2 | 09-10-2019 |
| | | JP 2016108218 A | 20-06-2016 |
| | | US 2016130175 A1 | 12-05-2016 |
| EP 3339741 A1 | 27-06-2018 | KEINE | |
| EP 3502072 A1 | 26-06-2019 | KEINE | |
| DE 202018102534 U1 | 15-05-2018 | CN 109956668 A | 02-07-2019 |
| | | CN 109956670 A | 02-07-2019 |
| | | DE 102018110908 A1 | 21-06-2018 |
| | | DE 102018111330 A1 | 27-06-2019 |
| | | DE 202018102534 U1 | 15-05-2018 |
| | | EP 3728152 A1 | 28-10-2020 |
| | | JP 2019112298 A | 11-07-2019 |
| | | JP 2019112299 A | 11-07-2019 |
| | | KR 20190076887 A | 02-07-2019 |
| | | KR 20190076903 A | 02-07-2019 |
| | | US 2019194054 A1 | 27-06-2019 |
| | | US 2019194062 A1 | 27-06-2019 |
| | | WO 2019121742 A1 | 27-06-2019 |
| DE 202019102795 U1 | 27-05-2019 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1837312 A1
- WO 2008065167 A1
- WO 2008065166 A1
- WO 2019049785 A1
- WO 2007139068 A1
- WO 2018211216 A1
- EP 1074520 A1


### In der Beschreibung aufgeführte Nicht-Patentliteratur


- Nanophase Glass-Ceramics. *Journal of the American Ceramic Society,* 1999, vol. 82 (1), 5-16
- **DR. H. A. SCHAEFFER.** Allgemeine Technologie des Glases, Grundlagen des Schmelzens und der Formgebung. *Erlangen,* September 1985
- **HAIGH et al.** The Lithium Minerals Industry. *Glass,* Dezember 1989
- Lithium minerals review 2002. *Glass,* 2002